# EUROPEAN PATENT SPECIFICATION

(11) **EP 1 079 084 B1**
(45) Date of publication and mention of the grant of the patent: **28.07.2004**
(21) Application number: 00117716.1
(22) Date of filing: 17.08.2000
(51) Int. Cl.: F02B 47/08, F02M 25/07, F02D 35/00, F02D 21/08

(54) **Internal combustion engine**
Brennkraftmaschine
Moteur à combustion interne

(30) Priority: 26.08.1999 JP 24022399
(43) Date of publication of application: 28.02.2001
(73) Proprietor: TOYOTA JIDOSHA KABUSHIKI KAISHA, Aichi-ken 471-8571 (JP)
(72) Inventor: Sasaki, Shizuo, Toyota-shi, Aichi-ken 471-8571 (JP); Iguchi, Satoshi, Toyota-shi, Aichi-ken 471-8571 (JP); Tanaka, Toshiaki, Toyota-shi, Aichi-ken 471-8571 (JP); Hirota, Shinya, Toyota-shi, Aichi-ken 471-8571 (JP); Gotoh, Masato, Toyota-shi, Aichi-ken 471-8571 (JP); Itoh, Kazuhiro, Toyota-shi, Aichi-ken 471-8571 (JP); Ito, Takekazu, Toyota-shi, Aichi-ken 471-8571 (JP)
(74) Representative: Leson, Thomas Johannes Alois, Dipl.-Ing.

(56) References cited:
- EP-A- 0 879 946
- EP-A- 0 903 481
- EP-A- 0 919 708
- EP-A- 0 921 285
- WO-A-99/32766
- US-A- 4 211 075
- US-A- 5 207 058
- US-A- 5 771 686

## Description

### BACKGROUND OF THE INVENTION

### 1. Field of the Invention

The present invention relates to a compression ignition type internal combustion engine.

### 2. Discussion of Related Art

In conventional internal combustion engines, such as diesel engines, an engine exhaust passage and an engine intake passage are connected to each other through an exhaust gas recirculation (hereinafter abbreviated to"EGR") passage so as to prevent or suppress generation of NOx, such that exhaust gas, or EGR gas, may be recirculated into the engine intake passage through the EGR passage. In this case, since the EGR gas has a relatively high specific heat, and is thus able to absorb a large quantity of heat, the combustion temperature within the combustion chamber decreases as the amount of EGR gas increases, namely, the EGR rate (the amount of EGR gas / the amount of EGR gas plus the amount of intake air) increases. The amount of NOx generated is reduced with a reduction in the combustion temperature, and therefore the amount of NOx generated is reduced with an increase in the EGR rate.

It is known in the art that the amount of NOx produced can be reduced by increasing the EGR rate. As the EGR rate is increased, however, the amount of soot, or smoke, generated by the engine starts rapidly increasing when the EGR rate exceeds a certain limit. With regard to this point, it was conventionally considered that smoke increases without limit as the EGR rate increases, and therefore the EGR rate at which smoke starts rapidly increasing was regarded as the maximum permissible limit.

Accordingly, the EGR rate is conventionally set within a range that does not exceed the maximum permissible limit. While the maximum permissible limit of the EGR rate greatly varies depending upon the type of the engine and the fuel, it is generally within a range of about 30% to 50%. In conventional diesel engines, therefore, the EGR rate is controlled to about 30% to 50% at the maximum.

Since the EGR rate was conventionally considered to have the maximum permissible limit, the EGR rate was selected within the range that does not exceed the maximum permissible limit so that the amount of smoke generated is reduced to be as small as possible. However, even if the EGR rate is determined so that the amounts of NOx and smoke generated are minimized, there is a limit to reduction in the amount of NOx and smoke generated, and in fact substantial amounts of NOx and smoke are still generated in actual engine operations.

In the course of studies on combustion of diesel engines, it was found that although smoke rapidly increases as described above as the EGR rate is made larger than the maximum permissible limit, there is a peak in the amount of smoke generated, and smoke starts rapidly decreasing if the EGR rate is further increased beyond this peak. It was also found that almost no smoke is generated, namely, almost no soot is produced, if the EGR rate is controlled to be equal to or greater than 70% during idling of the engine, or controlled to be equal to or greater than about 55% where the EGR gas is powerfully cooled down. It was also found that the amount of NOx generated at this time is considerably small. A further analysis was made based on the above facts, in an attempt to find a reason why no soot is generated in the above case, and eventually an appropriate combustion system that permits simultaneous reduction in soot and NOx was developed. While this type of combustion system will be described in detail later, the basic idea for the system is that growth of hydrocarbon is stopped midway before hydrocarbon turns into soot.

More specifically, it was revealed from further experiments and studies that growth of hydrocarbon is stopped midway before hydrocarbon turns into soot when the temperature of the fuel and its surrounding gas is equal to or lower than a certain temperature, and hydrocarbon grows or turns into soot in a moment when the temperature of the fuel and its surrounding gas becomes higher than the above certain temperature. In this case, the temperature of the fuel and its surrounding gas is greatly influenced by the heat absorbing function of gas that is present around the fuel upon combustion thereof, and the temperature of the fuel and its surrounding gas can be controlled by adjusting the quantity of heat absorbed by the gas around the fuel, depending upon the quantity of heat generated upon combustion of the fuel.

Thus, no soot is produced if the temperature of the fuel and its surrounding gas upon combustion within the combustion chamber is controlled to be lower than a temperature range in which growth of hydrocarbon is stopped midway, and the control of the temperature of the fuel and its surrounding gas can be performed by adjusting the quantity of heat absorbed by the gas surrounding the fuel. The hydrocarbon whose growth was stopped midway before turning into soot can be easily purified through after-treatment using an oxidizing catalyst or the like. This is the basic idea of the above type of combustion system.

Although the above mentioned type of combustion system permits soot and NOx to be reduced at the same time, particulates are still discharged from the combustion chamber. In view of this, the assignee of the present application has proposed an internal combustion engine (as disclosed in Japanese Patent Application No. 10-105017) wherein a particulate trapping device is disposed within the engine exhaust passage, for trapping particulates discharged from the combustion chamber, and combustion is performed in a new manner with the average air-fuel ratio being in a lean range so that unburned HC discharged from the combustion chamber is oxidized in the particulate trapping device, with a result of an increase in the temperature of the particulate trapping device, whereby the particulates trapped by the particulate trapping device can be burned.

Where the average air-fuel ratio within the combustion chamber is lean, however, the amount of unburned HC discharged from the combustion chamber is not large enough to increase the temperature of the particulate trapping device to a level at which the particulates can be burned. It is thus difficult to favorably burn particulates.

### SUMMARY OF THE INVENTION

It is therefore an object of the present invention to provide an enhanced internal combustion engine.

The object may be accomplished by an apparatus having the features of claim 1.

The above object may also be accomplished by a method having the features of claim 17.

According to the present invention as described above, when particulates should be burned, the temperature of the particulate trapping device can be rapidly raised to a level at which the particulates can be burned.

In one preferred form of the present invention, an exhaust gas recirculation system is provided for recirculating exhaust gas discharged from the combustion chamber, into an engine intake passage, and the inert gas consists of the exhaust gas recirculated by the exhaust gas recirculation system.

While the above object is accomplished by the combination of features of claim 1 or claim 17, sub-claims depending therefrom disclose further advantageous embodiments of the invention.

### BRIEF DESCRIPTION OF THE DRAWINGS

Fig. 1 is a view showing the whole system of a compression ignition type internal combustion engine constructed according to one embodiment of the present invention;
Fig. 2 is a diagram showing the amounts of smoke and NOx generated and others;
Fig. 3A and Fig. 3B are diagrams showing the combustion pressure;
Fig. 4 is a view showing fuel molecules;
Fig. 5 is a graph showing the relationship between the amount of smoke generated and the EGR rate:
Fig. 6 is a graph showing the relationship between the amount of fuel injected and the amounts of air, EGR gas and mixed gas with respect to a required load;
Fig. 7 is a graph showing a first operating region I and a second operating region II;
Fig. 8 is a graph showing the output of an air-fuel ratio sensor;
Fig. 9 is a diagram showing the opening of a throttle valve and so forth;
Fig. 10 is a graph showing the air-fuel ratio in the first operating region I;
Fig. 11 is a diagram showing a map of the amount of fuel to be injected;
Fig. 12A is a diagram showing a map of a target opening of a throttle valve;
Fig. 12B is a diagram showing a map of the target opening of an EGR control valve;
Fig. 13 is a graph showing the air-fuel ratio in a second mode of combustion;
Fig. 14 is a diagram showing a map of the amount of fuel to be injected;
Fig. 15A is a diagram showing a map of the target opening of the throttle valve;
Fig. 15B is a diagram showing a map of the target opening of the EGR cotrol valve;
Fig. 16A is a view useful in explaining an NOx absorbing operation;
Fig. 16B is a view useful in explaining an NOx releasing operation;
Fig. 17A is diagram showing a map of the amount of NOx absorbed per unit time in a first mode of combustion;
Fig. 17B is a diagram showing a map of the amount of NOx absorbed per unit time in the second mode of combustion;
Fig. 17C is a diagram showing a map of the amount of NOx released per unit time in the first mode of combustion;
Fig. 18 is a flowchart of a routine for setting an NOx release flag;
Fig. 19 is a flowchart of a routine for setting an SOx release flag;
Fig. 20 is a flowchart of a routine for setting a PM combustion flag;
Fig. 21 is a time chart showing a PM combustion process;
Fig. 22 is a time chart showing a PM combustion process;
Fig. 23 is a time chart showing an SOx release process;
Fig. 24A and Fig. 24B are time charts showing a PM combustion and SOx release process;
Fig. 25 is a flowchart of an engine operating control routine;

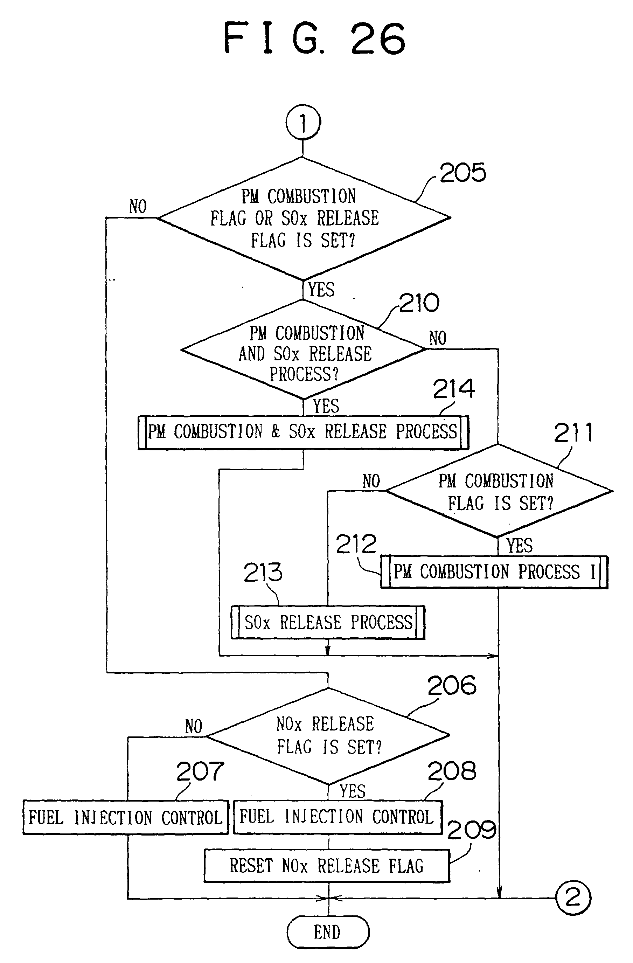

Fig. 26 is a flowchart of an engine operating control routine;
Fig. 27 is a flowchart of a routine for implementing a PM combustion process I;
Fig. 28 is a flowchart of a routine for implementing a PM combustion process II;
Fig. 29 is a flowchart of a routine for implementing the SOx release process;
Fig. 30 is a flowchart of a routine for implementing the PM combustion and SOx release process;
Fig. 31 is a flowchart of a routine for implementing the PM combustion and SOx release process;
Fig. 32 is a flowchart of a routine for implementing the PM combustion and SOx release process; and
Fig. 33 is a flowchart of a routine for implementing the PM combustion and SOx release process.

### DETAILED DESCRIPTION OF THE PREFERRED EMBODIMENT

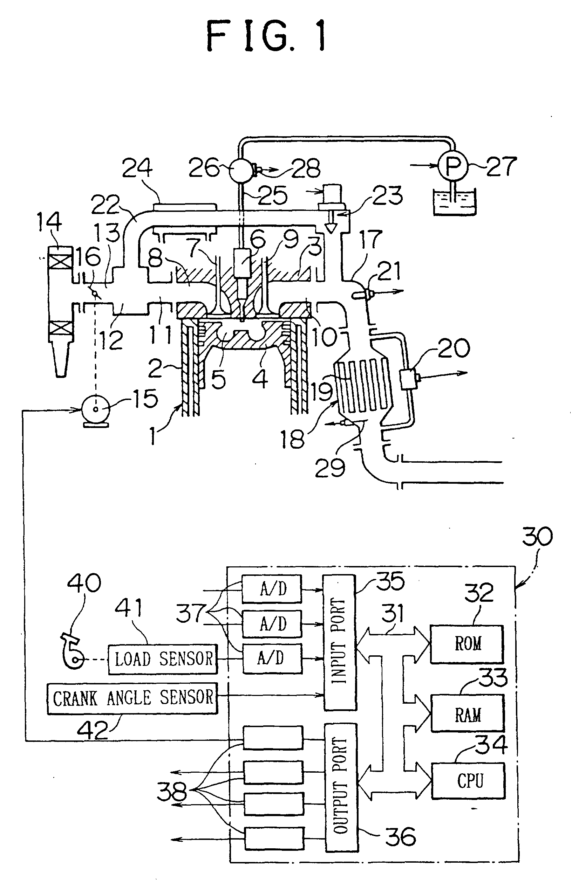

Fig. 1 illustrates the whole system of an internal combustion engine of four-stroke, compression ignition type, to which the present invention is applied.

Referring to Fig. 1, the internal combustion engine includes a main body 1 of the engine, cylinder block 2, cylinder head 3, piston 4, and a combustion chamber 5. The engine further includes an electrically controlled fuel injection valve 6, intake valve 7, intake port 8, exhaust valve 9, and an exhaust port 10. The intake port 8 communicates with a surge tank 12 via a corresponding intake branch pipe 11, and the surge tank 12 is connected to an air cleaner 14 via an intake duct 13. A throttle valve 16 that is driven by an electric motor 15 is disposed within the intake duct 13. On the other hand, the exhaust port 10 is connected to a particulate trapping device 18 via an exhaust manifold 17.

The particular trapping device 18 as shown in Fig. 1 incorporates a particulate filter 19 for trapping soot and other particulates contained in exhaust gas. While various types of particulate filters are known in the art, the particulate filter 18 as a typical example consists of a porous ceramic, honeycomb structure. To the particulate trapping device 18 is attached a differential pressure sensor 20 adapted for detecting a difference between the pressure sensed on the upstream side of the particulate filter 19 and that on the downstream side thereof.

An air-fuel ratio sensor 21 is disposed within the exhaust manifold 17, as shown in Fig. 1. The exhaust manifold 17 and the surge tank 12 are connected to each other through an EGR passage 22, and an electrically controlled EGR control valve 23 is disposed within the EGR passage 22. Also, a cooling system 24 for cooling EGR gas that flows through the EGR passage 22 is located around the EGR passage 22. In the embodiment shown in Fig. 1, engine coolant is fed to the cooling system 24 so that the EGR gas is cooled by the engine coolant.

Each fuel injection valve 6 is connected to a fuel reservoir, or a so-called common rail 26, via a fuel supply pipe 25. The fuel is supplied from an electrically controlled fuel pump 27 whose discharge amount is variable, into the common rail 26, and the fuel having been supplied into the common rail 26 is then supplied to each fuel injection valve 6 through a corresponding fuel supply pipe 25. The common rail 26 is equipped with a fuel pressure sensor 28 for detecting the fuel pressure within the common rail 26. In operation, the discharge amount of the fuel pump 27 is controlled based on an output signal of the fuel pressure sensor 28 so that the fuel pressure within the common rail 26 becomes equal to a target fuel pressure.

An electronic control unit 30 consists of a digital computer, and includes a ROM (read only memory) 32, RAM (random access memory) 33, CPU (microprocessor) 34, an input port 35 and an output port 36, which are connected to each other via a bidirectional bus 31. Output signals of the differential pressure sensor 20 and the air-fuel ratio sensor 21 are respectively transmitted to the input port 35 via corresponding AD converters 37, and an output signal of the fuel pressure sensor 28 is also transmitted to the input port 35 via a corresponding AD converter 37. The particulate trapping device 18 is provided with a temperature sensor 29 for detecting the temperature of the particulate filter 19, and an output signal of the temperature sensor 29 is transmitted to the input port 35 via a corresponding AD converter 37. A load sensor 41 that is connected to an accelerator pedal 40 operates to generate an output voltage that is proportional to the amount of depression L of the accelerator pedal 40, and the output voltage of the load sensor 41 is transmitted to the input port 35 via a corresponding AD converter 37. To the input port 35 is also connected a crank angle sensor 42 that generates an output pulse each time the crankshaft rotates 30°, for example. On the other hand, the output port 36 is connected to the fuel injection valve 6, electric motor 15, EGR control valve 23 and the fuel pump 27, via respective drive circuits 38.

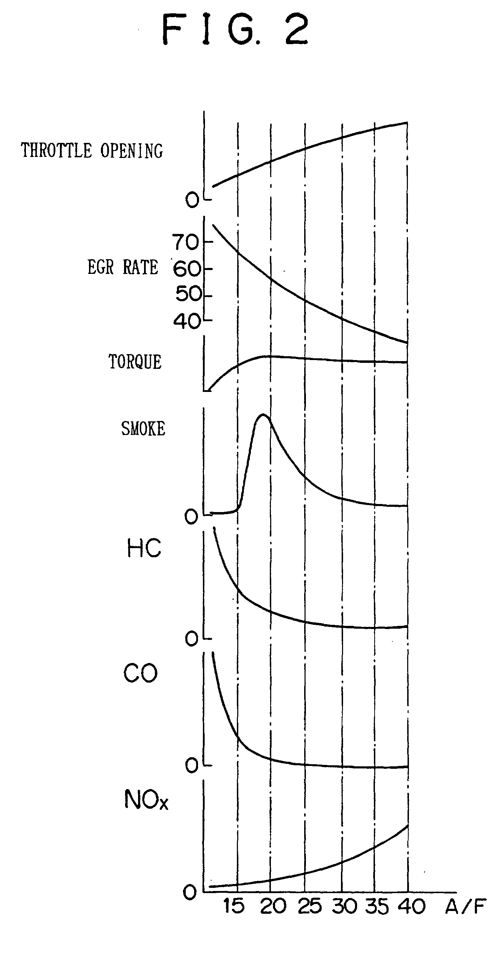

Fig. 2 shows changes in the output torque and changes in the discharge amounts of smoke, HC, CO and NOx in an experiment in which the air-fuel ratio A/F (the horizontal axis in Fig. 2) is varied by changing the opening of the throttle valve 16 and the EGR rate during low-load operations of the engine. It is understood from Fig. 2 that the air-fuel ratio A/F decreases as the EGR rate is increased in this experiment, and that the air-fuel ratio A/F is equal to or smaller than the stoichiometric air-fuel ratio (≈ 14.6) when the EGR rate is equal to or greater than 65 %.

As the air-fuel ratio A/F is reduced by increasing the EGR rate as shown in Fig. 2, the amount of smoke generated by the engine starts increasing when the EGR rate reaches around 40% and the air-fuel ratio A/F becomes equal to about 30. If the EGR rate is further increased to thereby reduce the air-fuel ratio A/F, the amount of smoke generated rapidly increases, and reaches its peak. If the EGR rate is kept further increased so as to reduce the air-fuel ratio A/F, the amount of smoke is rapidly reduced, and becomes substantially equal to zero when the EGR rate is controlled to 65% or greater and the air-fuel ratio A/F is reduced down to around 15.0. Thus, almost no soot is produced. At this time, the output torque of the engine is slightly reduced, and the amount of NOx generated by the engine is considerably reduced, whereas the amounts of HC and CO generated by the engine start increasing.

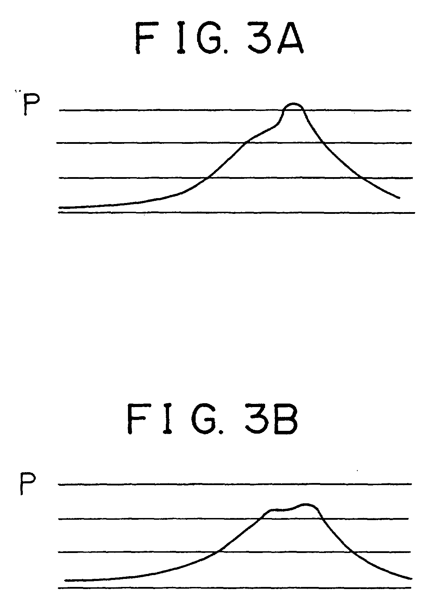

Fig. 3A shows changes in the combustion pressure within the combustion chamber 5 when the largest amount of smoke is generated with the air-fuel ratio A/F being equal to about 21. Fig. 3B shows changes in the combustion pressure within the combustion chamber 5 when the amount of smoke generated is substantially zero with the air-fuel ratio A/F being equal to about 18. By comparing Fig. 3A with Fig. 3B, it will be understood that the combustion pressure in the case of Fig. 3B where the amount of smoke generated is substantially zero is smaller than that in the case of Fig. 3A where a large amount of smoke is generated.

It follows from the results of the experiments as shown in Fig. 2 and Fig. 3 that the amount of NOx generated is considerably reduced when the air-fuel ratio A/F is equal to or smaller than 15.0 and almost no smoke is generated, as shown in Fig. 2. The reduction in the amount of NOx generated suggests that the combustion temperature within the combustion chamber 5 is lowered. Thus, the combustion temperature within the combustion chamber 5 is lowered when almost no soot is generated. It is also understood from Fig. 3 that the combustion pressure is reduced in the state of Fig. 3B in which almost no soot is generated, and therefore the combustion temperature in the combustion chamber 5 is lowered.

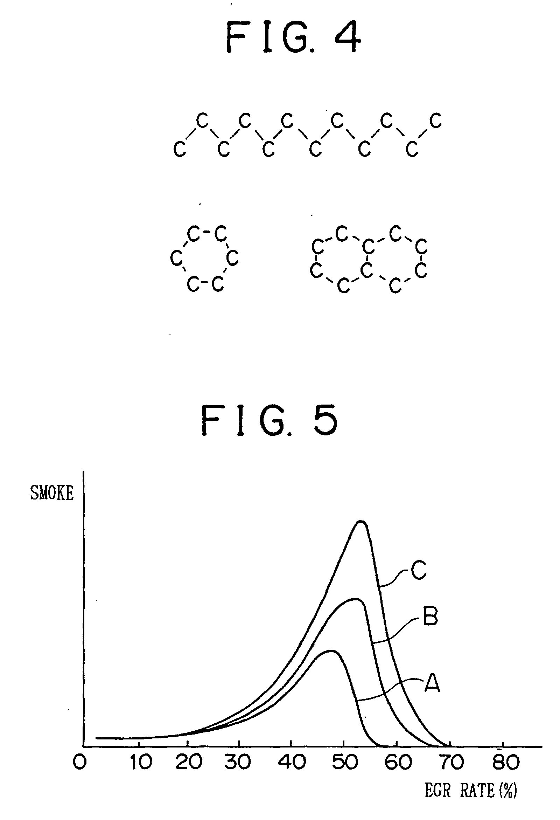

As shown in Fig. 2, the amounts of HC and CO discharged from the combustion chamber increase as the amount of smoke generated, or the amount of soot generated, becomes equal to substantially zero. This means that hydrocarbon is discharged without turning into soot. Namely, straight chain hydrocarbon or aromatic hydrocarbon contained in the fuel as shown in Fig. 4 thermally decomposes to form a precursor of soot as the temperature is raised with a lack of oxygen, and then soot is produced which mainly consists of a solid as an aggregate of carbon atoms. In this connection, the actual process of formation of soot is complicated, and the form taken by the precursor of soot is not clear. In any event, hydrocarbon as shown in Fig. 4 grows or turns into soot after being converted into a precursor of soot. While the amounts of HC and CO discharged from the combustion chamber increase as shown in Fig. 2 when the amount of soot generated becomes substantially zero, as described above, HC discharged at this time is regarded as a precursor of soot or hydrocarbon in the state prior to the precursor.

It follows from the above considerations based on the results of experiments as shown in Fig. 2 and Fig. 3 that the amount of soot generated becomes substantially zero when the combustion temperature within the combustion chamber 5 is low, and a precursor of soot or hydrocarbon in the state prior to the precursor is discharged from the combustion chamber 5. Further experiments and studies revealed that the process of formation of soot is stopped midway, namely, no soot is produced, when the temperature of the fuel and its surrounding gas within the combustion chamber 5 is equal to or lower than a certain temperature, and soot is produced where the temperature of the fuel and its surrounding within the combustion chamber 5 is higher than the above-indicated certain temperature.

The temperature of the fuel and its surrounding gas at which the growth process of hydrocarbon stops or ends in the state of a precursor of soot, namely, the above-described certain temperature, cannot be determined as a specific level since its depends upon the type of the fuel, air-fuel ratio, compression ratio and other factors. Nevertheless, the above certain temperature has a close relationship with the amount of NOx generated, and can be therefore defined by some degree based on the amount of NOx generated. Namely, as the EGR rate increases, the temperature of the fuel and its surrounding gas is lowered, and the amount of NOx generated is reduced. Almost no soot is produced when the amount of NOx generated is reduced to about 10 p.p.m. or smaller. Accordingly, the above-indicated certain temperature is substantially equal to the temperature at which the amount of NOx generated is about 10 p.p.m. or smaller.

Once soot is produced, it is impossible to purify the soot through an after treatment using a catalyst having an oxidizing function. To the contrary, a precursor of soot or hydrocarbon in the state prior to that can be easily purified through an after treatment using a catalyst having an oxidizing function. Taking account of the after treatment using a catalyst having an oxidizing function, a considerably large difference arises as to whether hydrocarbon is discharged from the combustion chamber 5 in the form of a precursor of soot or its previous state, or in the form of soot. The novel combustion system used in the present invention is characterized by discharging hydrocarbon in the form of a precursor of soot or its previous state from the combustion chamber 5 without producing soot in the combustion chamber 5, and oxidizing the thus discharged hydrocarbon by means of a catalyst having an oxidizing function.

To stop the growth of hydrocarbon in the state prior to formation of soot, the temperature of the fuel and its surrounding gas during combustion in the combustion chamber needs to be controlled to be lower than the temperature level at which soot is normally formed. In this case, it is found that the temperature of the fuel and its surrounding gas, which is to be reduced, is greatly influenced by the heat absorbing function of gas surrounding the fuel upon its combustion.

More specifically, if only the air exists around fuel, the fuel that has evaporated immediately reacts with oxygen in the air and burns. In this case, the temperature of the air away from the fuel is not elevated so much, and only the temperature around the fuel is locally elevated to a considerably high level. Namely, the air present away from the fuel hardly functions to absorb combustion heat of the fuel. In this case, the combustion temperature is locally raised to an extremely high level, and therefore unburned hydrocarbon is exposed to the combustion heat, thereby to form soot.

In the case where the fuel exists in a mixture of a large amount of inert gas and a small amount of the air, evaporative fuel diffuses around, and reacts with oxygen that is mixed with the inert gas, and burns. In this case, the combustion heat is absorbed by the surrounding inert gas, and therefore the combustion temperature does not rise so much, namely, the combustion temperature may be limited to a relatively low level. Thus, the inert gas present in the combustion chamber plays an important role in lowering the combustion temperature, and thus the combustion temperature can be controlled to a relatively low level, utilizing the heat absorbing function of the inert gas.

In the above case, it is necessary to provide inert gas in an amount large enough to absorb a sufficient quantity of heat so as to control the temperature of the fuel and its surrounding gas to be lower than the level at which soot is normally formed. Thus, a required amount of inert gas increases with an increase in the amount of the fuel used for combustion. In this connection, the inert gas performs a more powerful or effective heat absorbing function as the specific heat of the inert gas is larger, and it is therefore preferable to use a gas having a larger specific heat as inert gas. Since CO₂ and EGR gas have a relatively large specific heat, it is desirable to use EGR gas as the inert gas.

Fig. 5 shows the relationship between the EGR rate and smoke when the EGR gas is used as inert gas and the EGR gas is cooled by varying degrees. In Fig. 5, curve A represents the case where the EGR gas is powerfully cooled, and the temperature of the EGR gas is maintained at about 90 °C, and curve B represents the case where the EGR gas is cooled by a small-sized cooling system, while curve C represents the case where the EGR gas is not forcibly cooled.

Where the EGR gas is powerfully cooled as indicated by curve A in Fig. 5, the amount of soot generated by the engine reaches a peak at a point where the EGR rate is a little smaller than 50%. In this case, almost no soot is produced if the EGR rate is controlled to be approximately 55% or greater.

Where the EGR gas is cooled by some degree as indicated by curve B in Fig. 5, on the other hand, the amount of soot generated reaches a peak at a point where the EGR rate is a little larger than 50%. In this case, almost no soot is produced if the EGR rate is controlled to be approximately 65% or greater.

Where the EGR gas is not forcibly cooled as indicated by curve C in Fig. 5, the amount of soot generated reaches a peak at a point where the EGR rate is in the vicinity of 55%. In this case, almost no soot is produced if the EGR rate is controlled to be approximately 70% or greater.

Fig. 5 shows the amount of smoke generated by the engine when the engine load is relatively high. As the engine load is reduced, the EGR rate at which the amount of soot generated reaches a peak is slightly reduced, and the lower limit of the EGR rate at which almost no soot is produced is also slightly lowered. Thus, the lower limit of the EGR rate at which almost no soot is produced varies depending upon the degree of cooling of the EGR gas and the engine load.

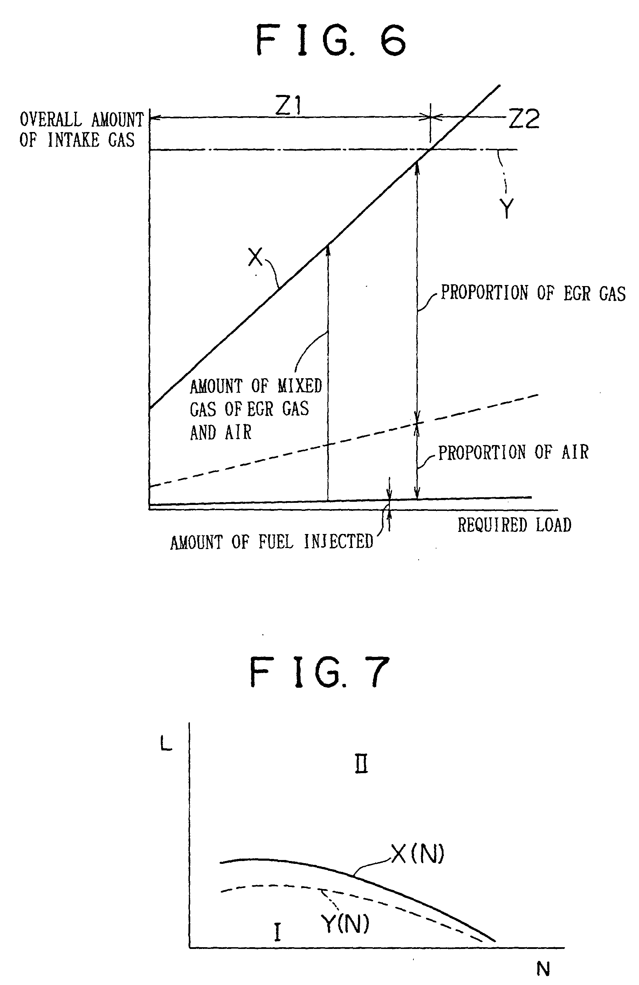

Fig. 6 shows the amount of a mixed gas of EGR gas used as inert gas and the air, which is required for reducing the temperature of the fuel and its surrounding gas upon combustion to be lower than the level at which soot is produced, the proportion of the air in the mixed gas, and the proportion of the EGR gas in the mixed gas. In Fig. 6, the vertical axis indicates the overall amount of gas that is introduced into the combustion chamber 5, and one-dot chain line indicates the overall amount of gas that is introduced into the combustion chamber when the engine is not supercharged. The horizontal axis indicates the required load, and Z1 indicates a low-load engine operating region.

Referring to Fig. 6, the proportion of the air, namely, the amount of the air contained in the mixed gas, represents such an amount of the air that is required for completely burning the fuel injected into the combustion chamber. Namely, in the case shown in Fig. 6, the ratio of the amount of the air to that of the fuel injected is equal to the stoichiometric air-fuel ratio. The proportion of the EGR gas in Fig. 6, namely, the amount of the EGR gas contained in the mixed gas, represents the minimum amount of EGR gas that is at least required for making the temperature of the fuel and its surrounding gas lower than the temperature level at which soot is formed. This amount of EGR gas, as represented by EGR rate, is approximately 55% or greater, and it is 70% or greater in the example of Fig. 6. Namely, if the overall amount of intake gas introduced into the combustion chamber 5 is controlled as indicated by solid line X in Fig. 6, and the ratio of the amount of the air to that of the EGR gas in the whole intake gas is controlled to that as shown in Fig. 6, the temperature of the fuel and its surrounding gas is made lower than the level at which soot is produced, and therefore almost no soot is generated. The amount of NOx generated in this case is around 10 p.p.m. or lower, which is considerably small.

If an increased amount of fuel is injected into the combustion chamber, the quantity of heat generated upon burning of the fuel increases, and therefore the quantity of heat absorbed by the EGR gas must be increased so that the temperature of the fuel and its surrounding gas is maintained at a level lower than the temperature at which soot is generated. Accordingly, the amount of the EGR gas must be increased as the amount of fuel injected increases, as shown in Fig. 6. Namely, the amount of the EGR gas needs to be increased as the required load is increased.

In the load region Z2 of Fig. 6, on the other hand, the overall amount of intake gas X that is required for preventing generation of soot exceeds the overall amount of the intake gas Y that can be sucked or introduced into the combustion chamber. In this case, therefore, both the EGR gas and the intake air or only the EGR gas needs to be supercharged or pressurized so that the overall amount of intake gas X required for inhibiting generation of soot is supplied into the combustion chamber 5. Where the EGR gas and others are not supercharged or pressurized in the load region Z2, the overall amount of intake gas X coincides with the overall amount of intake gas that can be introduced into the combustion chamber. To prevent generation of soot in this case, therefore, the amount of the air is slightly reduced, and the amount of the EGR gas is increased, so that the fuel is burned with the air-fuel ratio being controlled to be rich.

As described above, Fig. 6 shows the case where the fuel is burned at the stoichiometric air-fuel ratio. In the low-load engine operating region Z1 of Fig. 6, however, the amount of NOx generated can be controlled to around 10 p.p.m. or less while preventing generation of soot, even if the amount of the air is smaller than that as indicated in Fig. 6, and the air-fuel ratio is rich. Also, even if the amount of the air is made larger than that as indicated in Fig. 6 in the low-load operating region Z1, and the average value of the air-fuel ratio is in a lean range of 17 to 18, the amount of NOx generated can be controlled to around 10 p.p.m. or less while preventing generation of soot.

Although an excessive amount of fuel exists in the combustion chamber when the air-fuel ratio is rich, the excessive fuel does not turn into soot since the combustion temperature is kept at a relatively low level, and therefore no soot is produced. Also, only a considerably small amount of NOx is generated at this time. If the combustion temperature is elevated, a small amount of soot is generated even where the average air-fuel ratio is lean or the air-fuel ratio is substantially equal to the stoichiometric air-fuel ratio. According to the present invention, on the other hand, the combustion temperature is controlled to a low level, and therefore no soot is produced at all. Furthermore, only a slight amount of NOx is generated.

As described above, no soot is generated and a considerably amount of NOx is produced irrespective of the air-fuel ratio in the low-load engine operating region Z1, namely, irrespective of whether the air-fuel ratio is rich or equal to the stoichiometric air-fuel ratio, or the average air-fuel ratio is lean. Accordingly, it is preferable to control the average air-fuel ratio to be lean in this case, to assure an improved fuel consumption rate.

The temperature of the fuel and its surrounding gas upon combustion thereof in the combustion chamber is controlled to be equal to or lower than the level at which the growth of hydrocarbon is stopped midway, only when the engine load is relatively low, and a small quantity of heat is generated by the combustion. In the embodiment of the present invention, therefore, when the engine load is relatively low, the first mode of combustion, or low-temperature combustion, is carried out such that the temperature of the fuel and its surrounding gas upon combustion is controlled to be equal to or lower than the temperature level at which the growth of hydrocarbon is stopped midway. When the engine load is relatively high, on the other hand, the second mode of combustion, or conventional combustion that has been ordinarily performed, is carried out. In the first mode of combustion or low-temperature combustion, the amount of inert gas within the combustion chamber is larger than that at which the amount of soot generated reaches a peak, as is apparent from the above explanation. In the second mode of combustion, or conventional combustion that has been ordinarily performed, the amount of inert gas within the combustion chamber is smaller than that at which the amount of soot generated reaches a peak.

Fig. 7 shows the first operating region I in which the first mode of combustion, or low-temperature combustion, is conducted, and the second operating region II in which the second mode of combustion, or conventional combustion, is conducted. In Fig. 7, the vertical axis L indicates the amount of depression of the accelerator pedal 40, namely, the required load, and the horizontal axis N indicates the engine speed. Also in Fig. 7, X(N) represents the first boundary between the first operating region I and the second operating region II, and Y(N) represents the second boundary between the first operating region I and the second operating region II. A shift from the first operating region I to the second operating region II is judged based on the first boundary X(N), and a shift from the second operating region II to the first operating region I is judged based on the second boundary Y(N).

More specifically, if the required load L exceeds the first boundary X(N) as a function of the engine speed N when the engine is operating in the first operating region I while performing low-temperature combustion, the engine is judged as shifting from the first operating region I to the second operating region II, and combustion is performed in the conventional combustion method. If the required load L is subsequently reduced to be lower than the second boundary Y(N) as a function of the engine speed N, the engine is judged as shifting from the second operating region II to the first operating region I, and low-temperature combustion is performed again.

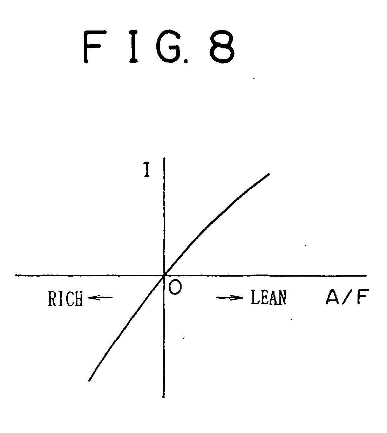

Fig. 8 shows the output of the air-fuel ratio sensor 21. As shown in Fig. 8, the output current I of the air-fuel ratio sensor 21 varies in accordance with the air-fuel ratio A/F. Accordingly, the air-fuel ratio can be determined from the output current I of the air-fuel ratio sensor 21.

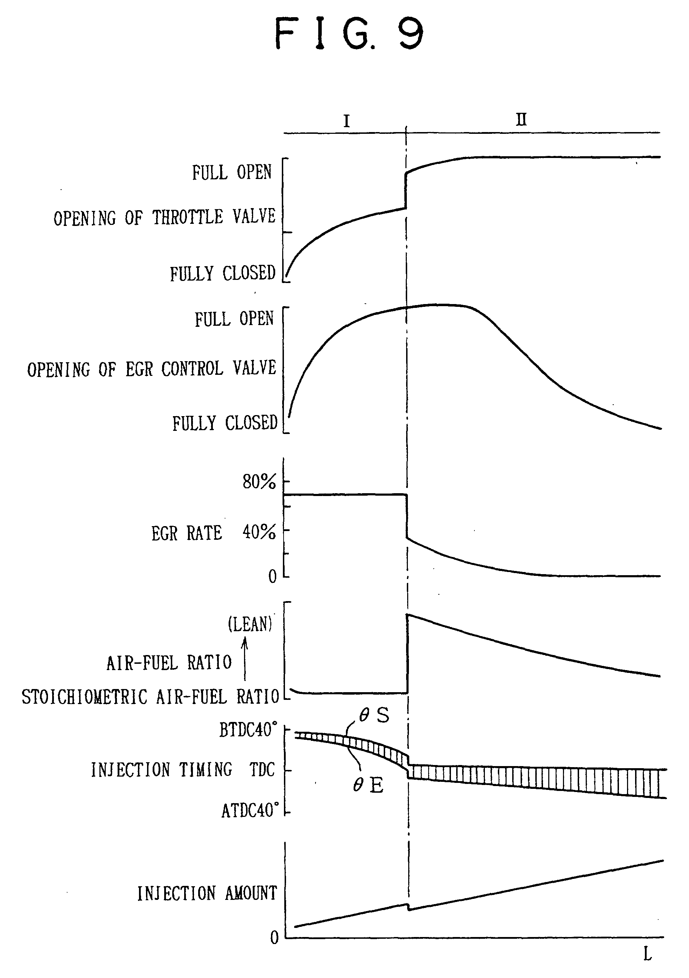

Referring next to Fig. 9, engine operation control in the first operating region I and the second operating region II will be schematically explained.

Fig. 9 shows the opening of the throttle valve 16 against the required load L, the opening of the EGR control valve 23, the EGR rate, the air-fuel ratio, the injection timing, and the amount of fuel injected. In the first operation region I in which the required load L is relatively low, the opening of the throttle valve 16 gradually increases from the vicinity of the fully closed position to about a half-open position as the required load L increases, and the opening of the EGR control valve 23 increases from the vicinity of the fully closed position to the full-open position as the required load L increases, as shown in Fig. 9. In the first operation region I in the example of Fig. 9, the EGR rate is controlled to about 70%, and the air-fuel ratio is made slightly lean.

In other words, the opening of the throttle valve 16 and the opening of the EGR control valve 23 are controlled in the first operating region I so that the EGR rate is approximated to 70%, and the air-fuel ratio is made slightly lean. At this time, the air-fuel ratio is controlled to a target lean air-fuel ratio based on the output signal of the air-fuel ratio sensor 21 by correcting or adjusting the opening of the EGR control valve 23. Also, the fuel is injected into the combustion chamber before the piston reaches the compression top dead center TDC. In this case, the injection start timing θS is delayed as the required load L increases, and the injection completion timing θE is also delayed with a delay in the injection start timing θS.

In the meantime, while the engine is idling, the throttle valve 16 is placed in the vicinity of the fully closed position, and the EGR control valve 23 is also placed in the vicinity of the fully closed position. With the throttle valve 16 almost fully closed, the pressure within the combustion chamber 5 at the beginning of compression is reduced, and therefore the compression pressure is reduced. As the compression pressure is reduced, compression work done by the piston 4 is reduced with a result of reduction in vibration of the engine main body 1. Namely, the throttle valve 16 is placed in the vicinity of the fully closed position during idling of the engine so as to suppress vibration of the engine main body 1.

When the operating region of the engine changes from the first operating region I to the second operating region II, the throttle opening suddenly increases so that the throttle valve 16 shifts from the half-open position toward the full-open position. In the example shown in Fig. 9, the EGR rate falls from about 70% down to 40% at this time, and the air-fuel ratio is suddenly increased.

The engine performs conventional combustion in the second operating region II. Although some soot and NOx are produced in this combustion mode, the engine exhibits an improved thermal efficiency as compared with that in the case of low-temperature combustion, and therefore the amount of fuel injected steps down as shown in Fig. 9 when the engine operating region changes from the first operating region I to the second operating region II.

In the second operating region II, the throttle valves 16 of the engine except a part thereof are kept in the full-open state, and the opening of the EGR control valve 23 is gradually reduced as the required load L increases. In this operating region II, the EGR rate decreases with an increase in the required load L, and the air-fuel ratio decreases with an increase in the required load L. It is, however, to be noted that the air-fuel ratio is kept in the lean range even if the required load L is increased. In the second operating region II, the injection start timing θS is in the vicinity of the compression top dead center TDC.

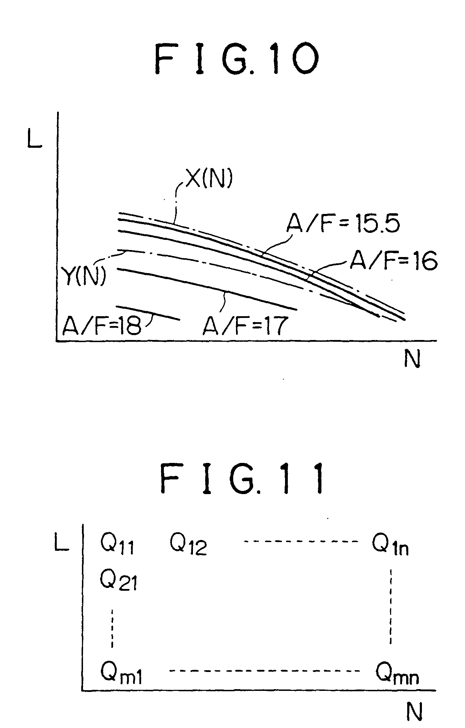

Fig. 10 shows the air-fuel ratio A/F in the first operating region I. In Fig. 10, respective curves labeled as A/F = 15.5, A/F = 16, A/F = 17, A/F = 18 indicate that the air-fuel ratio is 15.5, 16, 17, and 18, respectively, and the air-fuel ratio between the curves is determined proportionally. As shown in Fig. 10, the air-fuel ratio is lean in the first operating region I, and the air-fuel ratio A/F is increased to be even leaner as the required load L is reduced in the first operating region I.

More specifically, the quantity of heat generated upon combustion is reduced as the required load L is reduced. With a reduction in the required load L, therefore, low-temperature combustion can be performed even with a reduced EGR rate. The air-fuel ratio increases with a reduction in the EGR rate, and therefore the air-fuel ratio A/F is increased with a reduction in the required load L as shown in Fig. 10. The fuel consumption rate is improved as the air-fuel ratio is increased. In the present embodiment, therefore, the air-fuel ratio A/F is increased to be as lean as possible as the required load L is reduced.

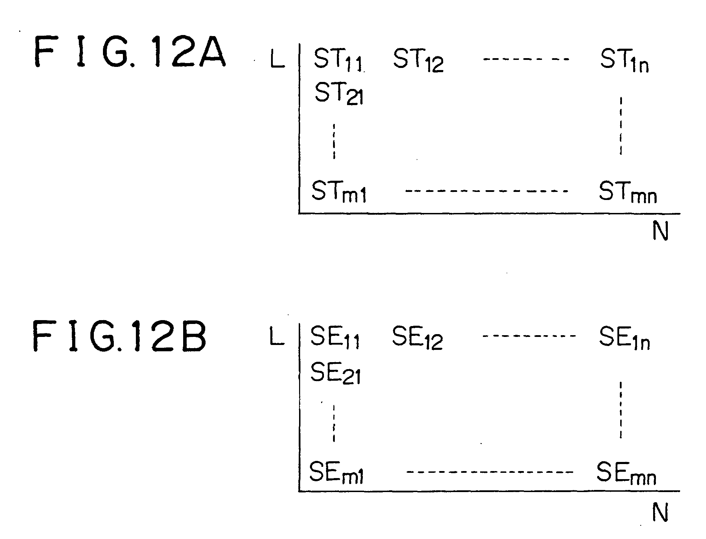

As shown in Fig. 11, the fuel injection amount Q in the first operating region I is stored in advance in the ROM 32 in the form of a map as a function of the required load L and the engine speed N. Also, the target opening ST of the throttle valve 16 that is required to make the air-fuel ratio equal to the target air-fuel ratio as indicated in Fig. 10 is stored in advance in the ROM 32 in the form of a map as a function of the required load L and the engine speed N, as shown in Fig. 12A. The target opening SE of the EGR control valve 23 required to make the air-fuel ratio equal to the target air-fuel ratio as indicated in Fig. 10 is stored in advance in the ROM 32 in the form of a map as a function of the required load L and the engine speed N, as shown in Fig. 12B.

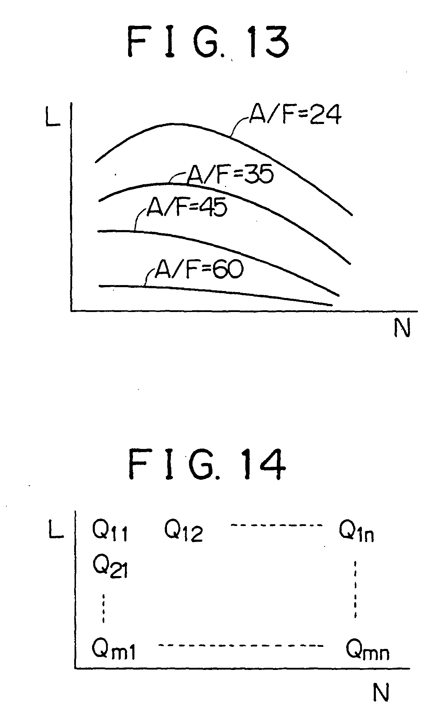

Fig. 13 shows the target air-fuel ratio when the second mode of combustion, or ordinary combustion by the conventional combustion method, is performed. In Fig. 13, respective curves labeled as A/F = 24, A/F = 35, A/F = 45, and A/F = 60 indicate that the target air-fuel ratio is equal to 24, 35, 45, and 60, respectively.

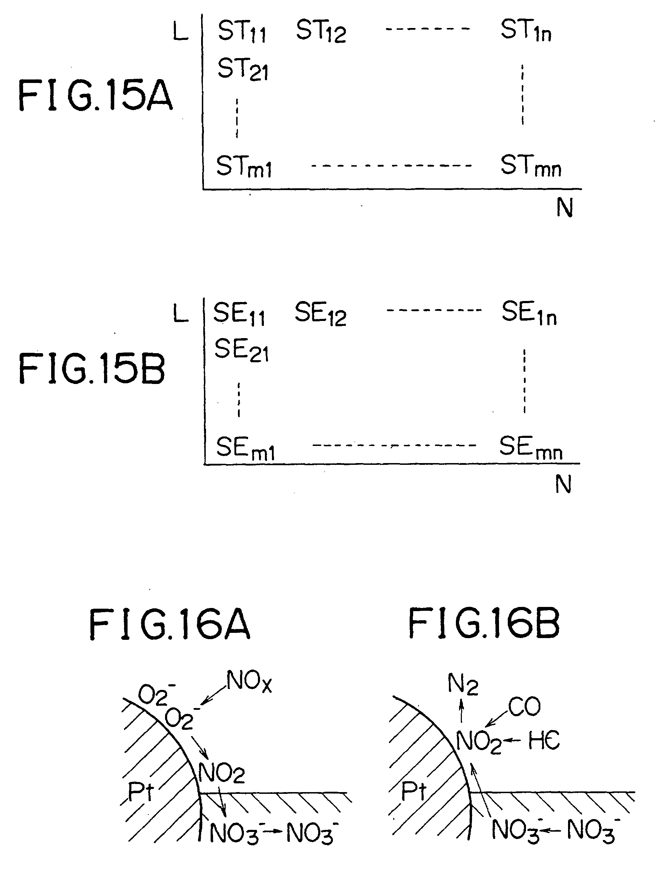

As shown in Fig. 14, the fuel injection amount Q in the second operating region II is stored in advance in the ROM 32 in the form of a map as a function of the required load L and the engine speed N. Also, the target opening ST of the throttle valve 16 that is required to make the air-fuel ratio equal to the target air-fuel ratio as shown in Fig. 13 is stored in advance in the ROM 32 in the form of a map as a function of the required load L and the engine speed N, as shown in Fig. 15A. The target opening SE of the EGR control valve 23 required to make the air-fuel ratio equal to the target air-fuel ratio as shown in Fig. 13 is stored in advance in the ROM 32 in the form of a map as a function of the required load L and the engine speed N.

In the present embodiment, the particulate filter 19 carries thereon an NOx absorbent. The NOx absorbent includes alumina, for example, as a carrier, and at least one selected from, for example, alkali metals, such as potassium K, sodium Na, lithium Li and cesium CS, alkali earth metals, such as barium Ba and calcium Ca, and rare earth metals, such as lanthanum La and yttrium Y, and a noble metal such as platinum Pt are carried on the carrier. Here, the ratio of the air to the fuel, which air is supplied to the engine intake passage, combustion chamber 5 and a portion of the exhaust passage located upstream of the particulate filter 19, will be called air-fuel ratio of exhaust gas. The NOx absorbent performs NOx absorbing and releasing functions, namely, is adapted to absorb NOx when the air-fuel ratio of exhaust gas is lean, and release the thus absorbed NOx when the air-fuel ratio of exhaust gas is equal to the stoichiometric air-fuel ratio or rich.

While the NOx absorbent actually performs NOx absorbing and releasing functions if the particulate filter 19 carrying the NOx absorbent is disposed in the engine exhaust passage, detailed mechanisms of these NOx absorbing and releasing functions have not been clarified. It is, however, considered that the NOx absorbing and releasing functions be performed according to a mechanism as shown in Fig. 16. While this mechanism will be hereinafter explained with respect to the case where platinum Pt and barium Ba are carried by the carrier, a similar mechanism equally applies where other noble metal, alkali metal, alkali earth metal, and/or rare earth metal is/are used.

In the compression ignition type internal combustion engine as shown in Fig. 1, combustion generally takes place in the combustion chamber 5 in the condition that the air-fuel ratio is in a lean range. Where combustion is carried out with the air-fuel ratio being in a lean range, a high concentration of oxygen is contained in the exhaust gas, and oxygen O₂ is deposited in the form of O₂⁻ or O²⁻ on the surface of platinum Pt as shown in Fig. 16A. On the other hand, NO contained in the flowing exhaust gas reacts with O₂⁻ or O²⁻ on the surface of platinum Pt, to form NO₂ (2NO + O₂ → 2NO₂). Then, a part of NO₂ thus formed is absorbed into the absorbent while being oxidized on platinum Pt, and diffused in the form of nitrate ion NO₃⁻ while combining with barium oxide BaO, as shown in Fig. 16A. In this manner, NOx is absorbed in the NOx absorbent. Thus, NO₂ is formed on the surface of platinum Pt as long as the exhaust gas contains a high concentration of oxygen, and NO₂ is absorbed into the absorbent to form nitrate ion NO₃⁻ as long as the NOx absorbing capability of the absorbent is not saturated.

If the air-fuel ratio of the flowing exhaust gas turns rich, on the other hand, the oxygen concentration in the exhaust gas is reduced, and consequently the amount of NO₂ formed on the surface of platinum Pt is reduced. If the amount of NO₂ produced is reduced, the reaction proceeds in the reverse direction (NO₃⁻ → NO₂), and thus nitrate ion NO₃⁻ is released in the form of NO₂ from the absorbent. At this time, NOx released from the NOx absorbent reacts with unburned HC and CO contained in exhaust gas, and is eventually reduced, as shown in Fig. 16B. If no NO₂ is present on the surface of platinum Pt, NO₂ is successively released from the absorbent. Thus, NOx is released from the NOx absorbent in a short time once the air-fuel ratio of the flowing exhaust gas turns rich, and the released NOx is reduced, thus preventing NOx from being discharged or released to the atmosphere.

In the above case, NOx is released from the NOx absorbent even if the air-fuel ratio of the flowing exhaust gas is substantially equal to the stoichiometric air-fuel ratio. Where the air-fuel ratio of the flowing exhaust gas is controlled to the stoichiometric air-fuel ratio, however, NOx is only slowly released from the NOx absorbent, and therefore it takes a relatively long time to release the whole NOx absorbed in the NOx absorbent.

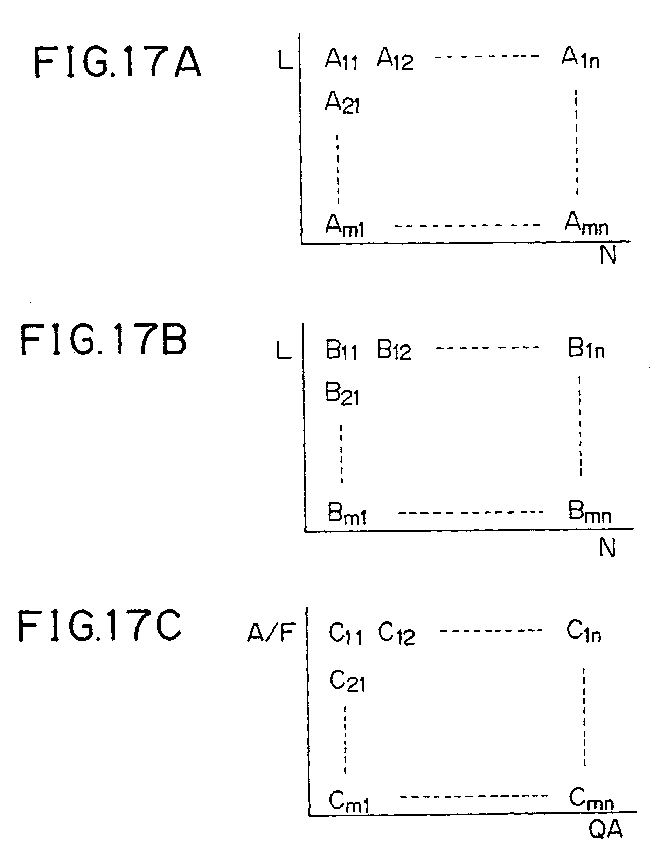

In the meantime, there is a limit to the NOx absorbing capability of the NOx absorbent, and NOx needs to be released from the NOx absorbent before the NOx absorbing capability of the NOx absorbent is saturated. To this end, there is a need to estimate the amount of NOx absorbed in the NOx absorbent. In the present embodiment, therefore, the amount of NOx absorbed "A" per unit time during the first mode of combustion is obtained in advance according to a map as shown in Fig. 17A as a function of the required load L and the engine speed N, and the amount of NOx absorbed "B" per unit time during the second mode of combustion is obtained in advance according to a map as shown in Fig. 17B as a function of the required load L and the engine speed N. Furthermore, the amount of NOx released "C" per unit time when the air-fuel ratio turns rich or becomes equal to the stoichiometric ratio during the first mode of combustion is obtained in advance according to a map as shown in Fig. 17C as a function of the air-fuel ratio A/F and the amount of the intake air QA. The total amount of NOx absorbed in the NOx absorbent ΣNOX is then estimated by integrating or summing up the NOx absorption amounts "A" and "B" per unit time, and subtracting the NOx release amount "C" per unit time from the sum. In this connection, the amount of intake air is calculated based on the required load L and the engine speed N.

In this embodiment of the present invention, NOx is released from the NOx absorbent when the total NOx absorption amount ΣNOX exceeds a predetermined permissible maximum value MAX. Namely, when the total NOx absorption amount ΣNOX exceeds the permissible maximum value MAX while low-temperature combustion is being performed, the air-fuel ratio in the combustion chamber 5 is temporarily controlled to be rich so that NOx can be released from the NOx absorbent. As described above, substantially no soot is produced even if the air-fuel ratio turns rich during low-temperature combustion.

If the total NOx absorption amount ΣNOX exceeds the permissible maximum value MAX during the second mode of combustion, on the other hand, additional fuel is injected into the combustion chamber in the latter half of an expansion stroke or during an exhaust stroke. The amount of the additional fuel is determined so that the air-fuel ratio of exhaust gas flowing into the NOx absorbent becomes rich. With the additional fuel thus injected, NOx is released from the NOx absorbent.

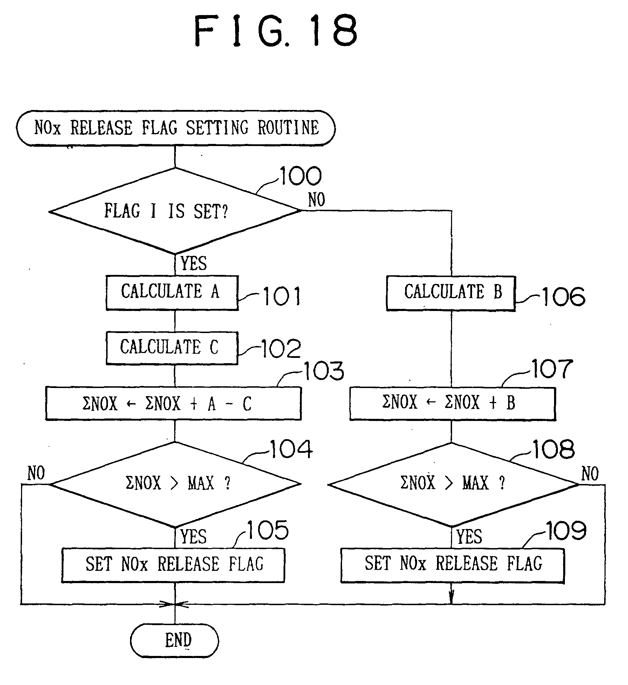

Fig. 18 shows a control routine for setting an NOx release flag that is to be set when NOx should be released from the NOx absorbent. This routine is executed by interrupting a main control routine at certain time intervals.

Referring to Fig. 18, step 100 is initially executed to determine whether a flag I indicating that the current engine operating region is the first operating region I is set or not. If the flag I is set, namely, if the engine is operating in the first operating region I, the control flow goes to step 101 to calculate the amount "A" of NOx absorbed per unit time, based on the map as shown in Fig. 17A. Step 102 is then executed to calculate the amount "C" of NOx released per unit time, based on the map as shown in Fig. 17C. In the next step 103, "A" is added to the total NOx absorption amount ΣNOX, and "C" is subtracted from the total NOx absorption amount ΣNOX. Step 104 is then executed to determine whether the total NOx absorption amount ΣNOX exceeds the permissible maximum value MAX. If ΣNOX is larger than MAX, the control flow goes to step 105 to set the NOx release flag.

If step 100 determines that the flag I is reset, namely, the current engine operating region is the second operating region II, the control flow goes to step 106 to calculate the amount "B" of NOx absorbed per unit time, based on the map as shown in Fig. 17B. In the next step 107, "B" is added to the total NOx absorption amount ΣNOX. Step 108 is then executed to determine whether the total NOx absorption amount ΣNOX exceeds the permissible maximum value MAX. If ΣNOX is larger than MAX, the control flow goes to step 109 to set the NOx release flag.

In the meantime, SOx is also contained in exhaust gas, and the NOx absorbent absorbs SOx as well as NOx. The mechanism by which SOx is absorbed by the NOx absorbent is considered to be substantially the same as the NOx absorption mechanism as described above.

The mechanism by which SOx is absorbed by the NOx absorbent will be now explained with respect to the case where platinum Pt and barium Ba are carried by the carrier, similarly to the case when the NOx absorption mechanism was explained. When the air-fuel ratio of exhaust gas is lean, oxygen O₂ is deposited in the form of O₂⁻ or O²⁻ on the surface of platinum Pt, and SO₂ contained in the exhaust gas reacts with O₂⁻ or O²⁻ on the surface of platinum Pt, thereby to form SO₃. Then, part of SO₃ thus formed is absorbed into the absorbent while being further oxidized on platinum Pt, and diffuses within the absorbent in the form of sulfate ion SO₄²⁻ while combining with barium oxide BaO, to thus form stable sulfate BaSO₄.

The sulfate BaSO₄ thus formed is stable and hard to decompose, and is therefore likely to remain as it is without being decomposed even if the air-fuel ratio of exhaust gas is simply made rich. Accordingly, the amount of sulfate BaSO₄ in the NOx absorbent increases with time, and the amount of NOx that can be absorbed by the NOx absorbent is reduced with time. If the temperature of the NOx absorbent becomes equal to or higher than a certain temperature, e.g., 600 °C, the sulfate BaSO₄ decomposes within the NOx absorbent, and SOx is released from the NOx absorbent if the air-fuel ratio of the exhaust gas flowing into the NOx absorbent is controlled to be rich.

In the present embodiment, when SOx should be released from the NOx absorbent, the temperature of the NOx absorbent is maintained at a high level during the first mode of combustion, and the air-fuel ratio of the exhaust gas is controlled to be rich, so that SOx is released from the NOx absorbent.

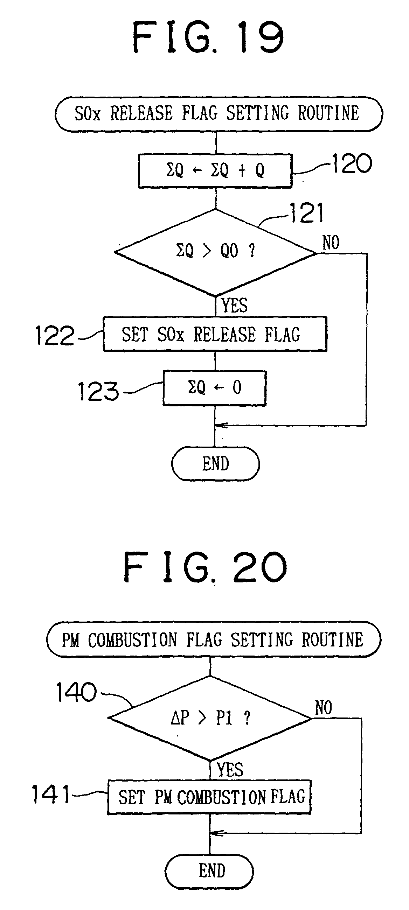

Fig. 19 is a control routine for setting an SOx release flag when SOx should be released from the NOx absorbent.

Referring to Fig. 19, step 120 is initially executed to calculate an integrated value ΣQ of the fuel injection amount by adding an amount "Q" of fuel injected to ΣQ. Step 121 is then executed to determine whether the integrated value ΣQ of the fuel injection amount has exceeded the permissible maximum value Q0. If ΣQ becomes larger than Q0, the control flow goes to step 122 to set the SOx release flag, and then goes to step 123 to make ΣQ equal to zero. Since a certain amount of sulfur is contained in the fuel, the integrated value ΣQ of the fuel injection amount is proportional to the amount of SOx absorbed by the NOx absorbent. When ΣQ becomes greater than Q0, therefore, the SOx release flag is set.

As described above, a noble metal, such as platinum, is carried on the carrier of the NOx absorbent, and therefore the NOx absorbent has an oxidizing function When the engine is operating in the first operating region I, and low-temperature combustion is carried out, almost no soot is generated, but instead unburned hydrocarbon as a precursor of soot or in the state prior to the precursor is discharged from the combustion chamber 5, as described above. With the NOx absorbent having an oxidizing function as described above, the unburned hydrocarbon discharged from the combustion chamber 5 can be favorably oxidized by the NOx absorbent.

In the meantime, particulates consisting of soot or soluble substances SOF are discharged from the combustion chamber, and successively deposited on the particulate filter 19. Accordingly, the amount of particulates deposited on the particulate filter 19 gradually increases with time. In this embodiment of the present invention, the particulates are caused to burn when the amount of the particulates deposited on the particulate filter 19 exceeds its permissible amount. In this case, the temperature at which the particulates are favorably burned is in a range of about 500°C to 600°C. When the particulates are to be burned, therefore, the temperature of the particulate filter 19 is raised to 500°C ~ 600°C, and maintained at 500°C ~ 600°C until the combustion of all of the particulates is completed.

In the present embodiment, whether the amount of the particulates deposited on the particulate filter 19 has exceeded the permissible value or not is judged from a difference in the pressure between two locations upstream and downstream of the particulate filter 19.

Fig. 20 is a control routine for setting a PM (Particulate Matter) combustion flag when the particulates are to be burned. As shown in Fig. 20, step 140 is initially executed to determine whether a difference ΔP between the pressure on the upstream side of the particulate filter 19 and that on the downstream side of the filter 19 has exceeded a permissible value P1 or not. If ΔP becomes larger than P1, the control flow goes to step 141 to set the PM combustion flag.

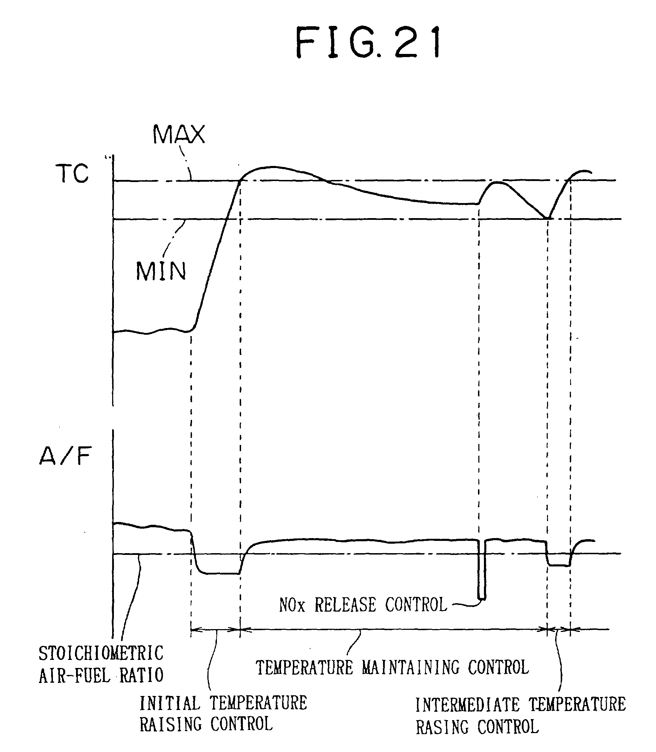

Referring next to Fig. 21 through Fig. 24, the PM combustion process, NOx release process and SOx release process will be now explained in detail.

Fig. 21 shows the case where the PM combustion flag is set in an attempt to burn particulates when the first mode of combustion (low-temperature combustion) takes place with the current average air-fuel ratio in the combustion chamber 5 being in a lean range.

If the PM combustion flag is set, the initial temperature raising control as shown in Fig. 21 is performed. In the example as shown in Fig. 21, the average air-fuel ratio in the combustion chamber 5 is controlled to be richer than said current average air-fuel ratio, preferably to be stoichiometric or rich, during the initial temperature raising control. In this example of Fig. 21, the initial temperature raising control is performed until the temperature of the particulate filter 19 detected by the temperature sensor 29 reaches the upper-limit temperature MAX suitable for combustion of the particulates. Fig. 21 also shows the lower-limit temperature MIN that is required to favorably continue combustion of the particulates.

In the compression ignition type internal combustion engine as shown in Fig. 1, part of the air in the combustion chamber 5 is not used for combustion even if the average air-fuel ratio in the combustion chamber 5 is rich, and therefore a large amount of remaining oxygen and a large amount of unburned HC are discharged from the combustion chamber 5. At this time, however, almost no soot is generated, as described above. If a large amount of remaining oxygen and a large amount of unburned HC are discharged from the combustion chamber 5 in this manner, the unburned HC is oxidized in a moment on the particulate filter 19. As a result, a large quantity of heat due to the oxidizing reaction is generated, and therefore the temperature TC of the particulate filter 19 is elevated.

The temperature TC of the particulate filter 19 can also be relatively rapidly raised even where the average air-fuel ratio in the combustion chamber 5 is equal to the stoichiometric air-fuel ratio. In this case, however, the amount of unburned HC discharged from the combustion chamber 5 is smaller than that in the case where the average air-fuel ratio is rich, and therefore the temperature TC of the particulate filter 18 cannot be raised as rapidly as in the case where the average air-fuel ratio is rich. Where the average air-fuel ratio in the combustion chamber 5 is lean, the amount of unburned HC discharged from the combustion chamber 5 is small, and therefore the temperature of the particulate filter 19 cannot be expected to increase rapidly in this case.

In a stratified charge combustion type internal combustion engine wherein an air-fuel mixture is formed in a limited region within the combustion chamber, and the air-fuel mixture is fired by a spark plug, a larger amount of remaining oxygen and a large amount of unburned HC are discharged from the combustion chamber if the average air-fuel ratio in the combustion chamber is rich. Thus, the present invention may be equally applied to such a stratified charge combustion type engine.

With the initial temperature raising control thus performed, particulates on the particulate filter 19 start burning. Once the combustion of particulates is started, temperature maintaining control is performed in which the temperature TC of the particulate filter 19 is maintained at a level equal to or higher than the lower-limit temperature MIN so that the particulates are continuously burned. In order to keep burning the particulates, a sufficient amount of oxygen needs to be supplied to the particulate filter 19, and therefore the first mode of combustion is performed while the average air-fuel ratio in the combustion chamber 5 is controlled to be lean under the temperature maintaining control, as shown in Fig. 21. In the temperature maintaining control, the average air-fuel ratio may also be maintained at the stoichiometric air-fuel ratio.

If the temperature TC of the particulate filter 19 is reduced down to the lower-limit temperature MIN during the temperature maintaining control, intermediate temperature raising control is performed. In the intermediate temperature raising control, the average air-fuel ratio in the combustion chamber 5 is controlled to be richer than said current average air-fuel ratio, preferably stoichiometric or rich, in the first combustion mode, as shown in Fig. 21. If the average air-fuel ratio in the combustion chamber 5 turns richer than said current average air-fuel ratio, preferably stoichiometric or rich, the temperature TC of the particulate filter 19 is raised.

When the NOx release flag is set during the temperature maintaining control, NOx release control is performed, and the average air-fuel ratio in the combustion chamber 5 is controlled to be rich in the first combustion mode, as shown in Fig. 21. As a result, NOx is released from the NOx absorbent. At this time, too, the temperature TC of the particulate filter 19 is raised.

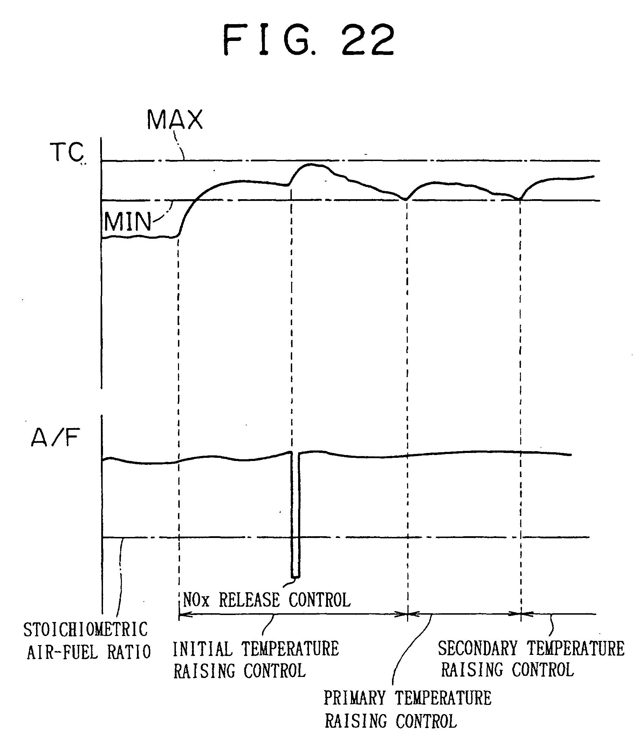

Fig. 22 shows the case where the PM combustion flag is set in an attempt to burn particulates during the second mode of combustion while the average air-fuel ratio in the combustion chamber 5 is lean.

When the PM combustion flag is set, the initial temperature raising control is performed as shown in Fig. 22. The initial temperature raising control during the second mode of combustion is roughly classified into two methods. One of these methods is to increase the amount of unburned HC discharged, and the other method is to increase the temperature of exhaust gas.

The first method of increasing the amount of unburned HC discharged may be practiced in two manners. In one of the manners, the fuel injection timing is changed so as to increase the amount of unburned HC generated in the combustion chamber 5. In the other manner, additional fuel is injected into the combustion chamber 5 after injection of main fuel, and then discharged from the combustion chamber 5 without being completely burned.

The second method of increasing the temperature of exhaust gas may be practiced by delaying the fuel injection timing. As a method of increasing the temperature of exhaust gas by a large degree, a small amount of auxiliary fuel is injected before injection of main fuel, and the injection timing of the main fuel is further delayed. In this connection, while the temperature of exhaust gas is increased as the injection timing of main fuel is delayed, misfiring may occur if the injection is too late. In this case, the injection timing can be delayed without causing misfiring of the engine if a small amount of auxiliary fuel is injected, and consequently the temperature of the exhaust gas can be significantly increased.

The initial temperature raising control may be performed in any of the methods as described above. As one example, there will be described the case where the injection timing is delayed upon the initial temperature raising control.

If the fuel injection timing is delayed upon the initial temperature raising control, the temperature TC of the particulate filter 19 is raised as shown in Fig. 22, and combustion of particulates on the particulate filter 19 is started. If the temperature TC of the particulate filter 19 is subsequently reduced down to the lower-limit temperature MIN, the primary temperature raising control is performed. Under the primary temperature raising control, the fuel injection timing is further delayed so that the temperature of exhaust gas is increased. If the temperature TC of the particulate filter 19 is reduced down to the lower-limit temperature MIN again, the secondary temperature raising control is performed. Under the secondary temperature raising control, auxiliary fuel is injected before injection of main fuel, and at the same time the injection timing of the main fuel is further delayed, so that the temperature of exhaust gas is increased.

Also, NOx release control is performed when the NOx release flag is set, and an additional fuel is injected during an expansion stroke or exhaust stroke of the engine after the injection of main fuel so that the average air-fuel ratio in the combustion chamber 5 becomes rich, as shown in Fig. 22. As a result, NOx is released from the NOx absorbent. At this time, too, the temperature TC of the particulate filter 19 is elevated.

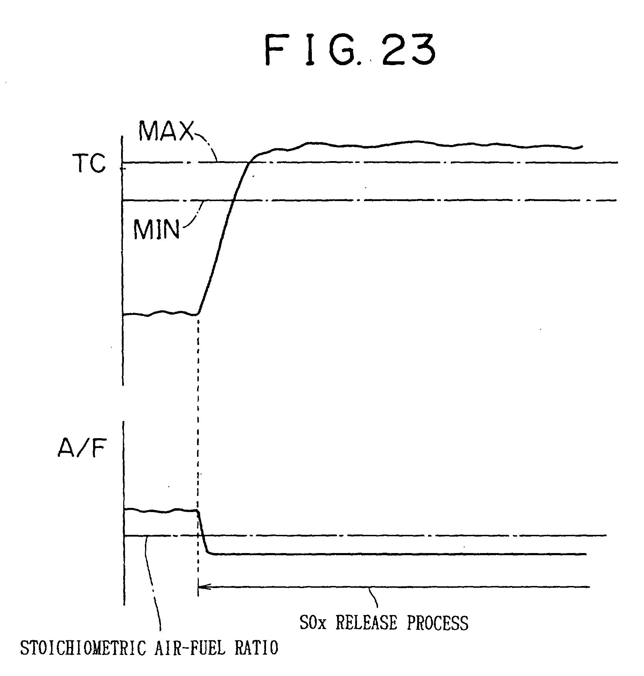

Fig. 23 shows a SOx release process. In the present embodiment, when the SOx release flag is set, the average air-fuel ratio in the combustion chamber 5 is maintained in a rich range in the first combustion mode as shown in Fig. 23 until release of SOx is completed.

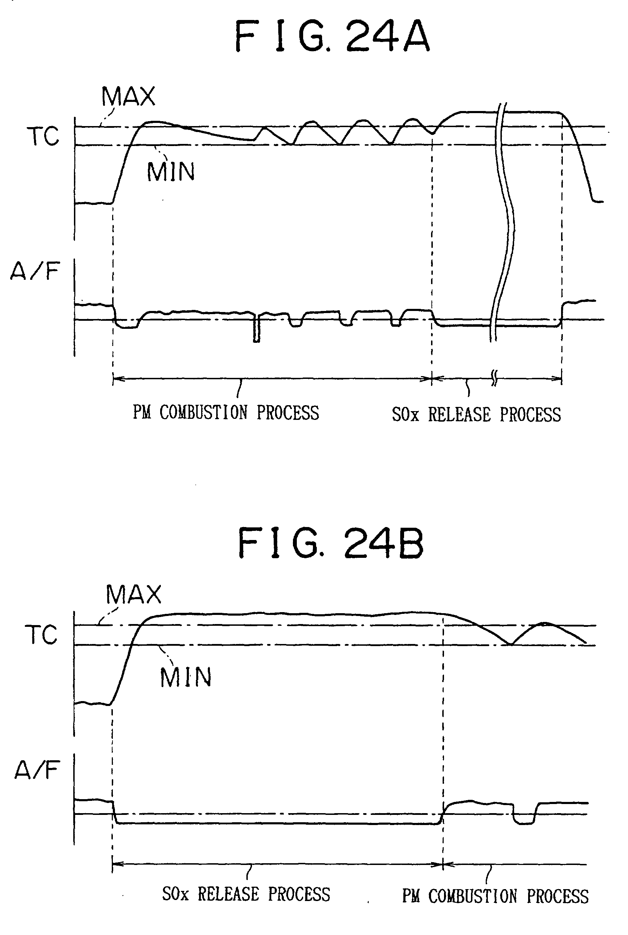

Fig. 24A and Fig. 24B show the case where it was determined that combustion of particulates, or PM combustion process, and SOx release process should be both conducted at the same time. More specifically, where the amount of SOx absorbed in the NOx absorbent is larger than a predetermined value when the PM combustion flag is set, or where the amount of particulates deposited onto the particulate filter 19 is larger than a predetermined value when the SOx release flag is set, it is determined that the PM combustion process and the SOx release process should be both carried out at the same time. In this case, the SOx release process may be executed immediately after completion of the PM combustion process, as shown in Fig. 24A, or the PM combustion process may be executed immediately after completion of the SOx release process, as shown in Fig. 24B.

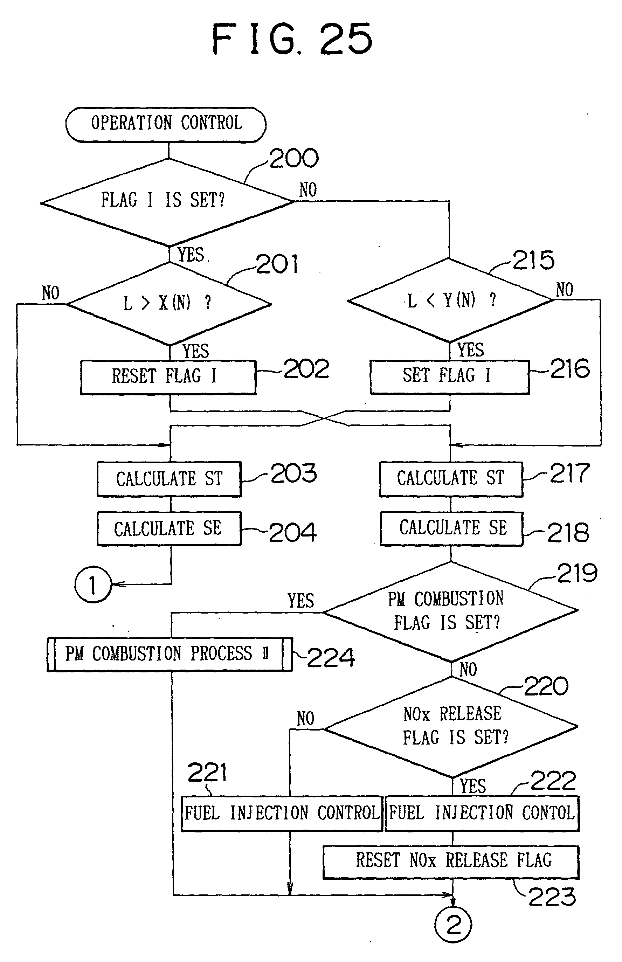

Referring next to Fig. 25, operation control will be now explained. In Fig. 25, step 200 is initially executed to determine whether the flag I is set or not, namely, whether the engine is currently in the first operating region I. If the flag I is set, namely, if the engine is in the first operating region I, the control flow goes to step 201 to determine whether the required load L becomes larger than the first boundary X1(N). If L is equal to or smaller than X1, the control flow goes to step 203 in which low-temperature combustion is performed.

More specifically, in step 203, a target opening ST of the throttle valve 16 is obtained from the map as shown in Fig. 12A, and the opening of the throttle valve 16 is controlled to the target opening ST. In the next step 204, a target opening SE of the EGR control valve 23 is obtained from the map as shown in Fig. 12B, and the opening of the EGR control valve 23 is controlled to the target opening SE. Step 205 is then executed to determine whether either the PM combustion flag or the SOx release flag is set or not. If neither the PM combustion flag nor the SOx release flag is set, the control flow goes to step 206.

In step 206, it is determined whether the NOx release flag is set or not. If the NOx release flag is not set, the control flow goes to step 207 to perform fuel injection based on the map as shown in Fig. 11 so as to provide the air-fuel ratio as indicated in Fig. 10. At this time, low-temperature combustion is performed with a lean air-fuel ratio. If step 206 determines that the NOx release flag is set, the control flow goes to step 208 in which fuel injection control is performed so that the average air-fuel ratio in the combustion chamber 5 becomes rich. As a result, NOx is released from the NOx absorbent. Step 209 is then executed to reset the NOx release flag.

When step 205 determines that either the PM combustion flag or the SOx release flag is set, the control flow goes to step 210 to determine whether both of the PM combustion process and SOx release process should be executed at the same time. If step 210 determines that the PM combustion process and the SOx release process need not be both executed at the same time, the control flow goes to step 211 to determine whether the PM combustion flag is set or not.

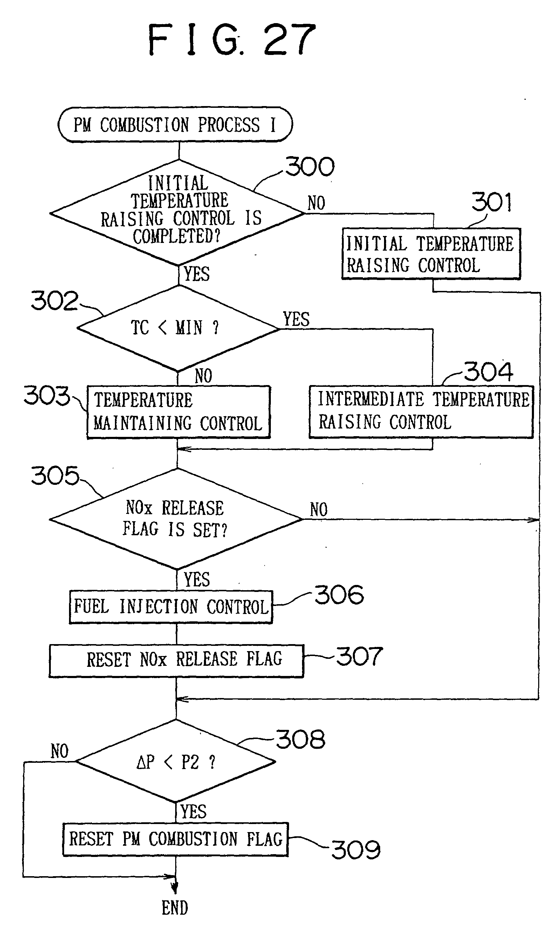

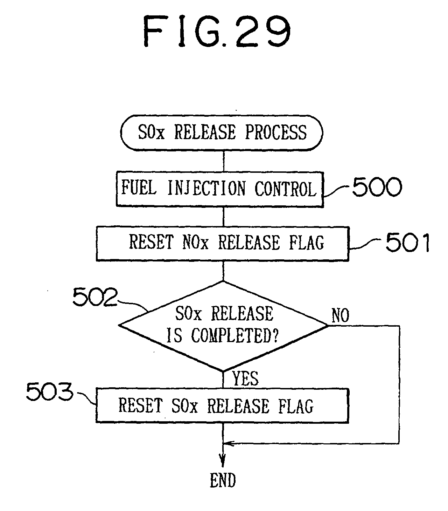

If the PM combustion flag is set, the control flow goes to step 212 to carry out the PM combustion process I as shown in Fig. 21. A routine for implementing the PM combustion process I is illustrated in Fig. 27. If the PM combustion flag is not set, namely, when the SOx release flag is set, on the other hand, the control flow goes to step 213 to carry out the SOx release process as shown in Fig. 23. A routine for implementing the SOx release process is illustrated in Fig. 29.

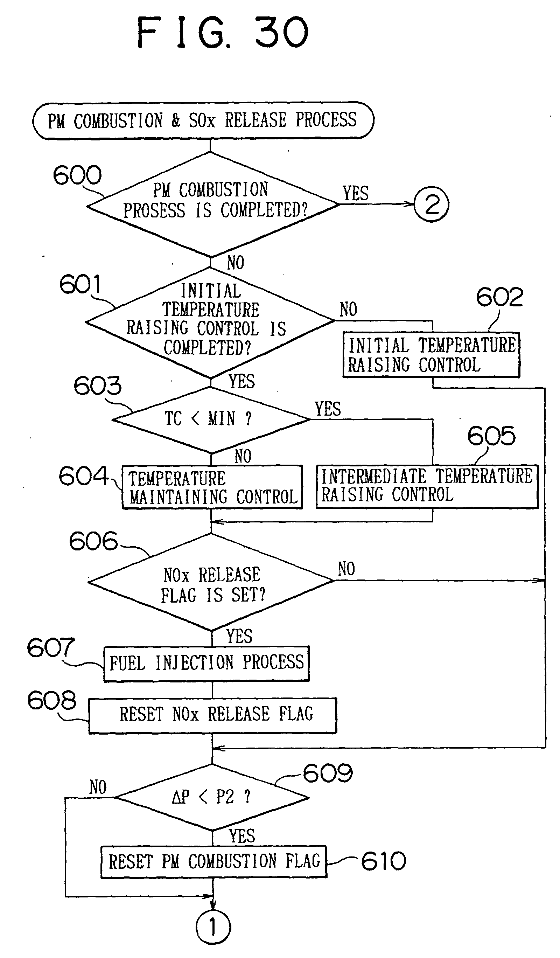

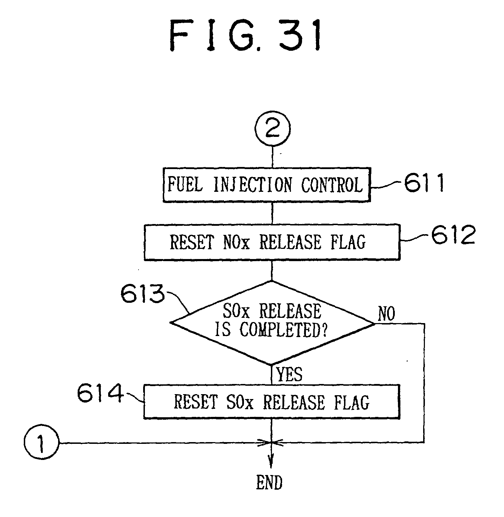

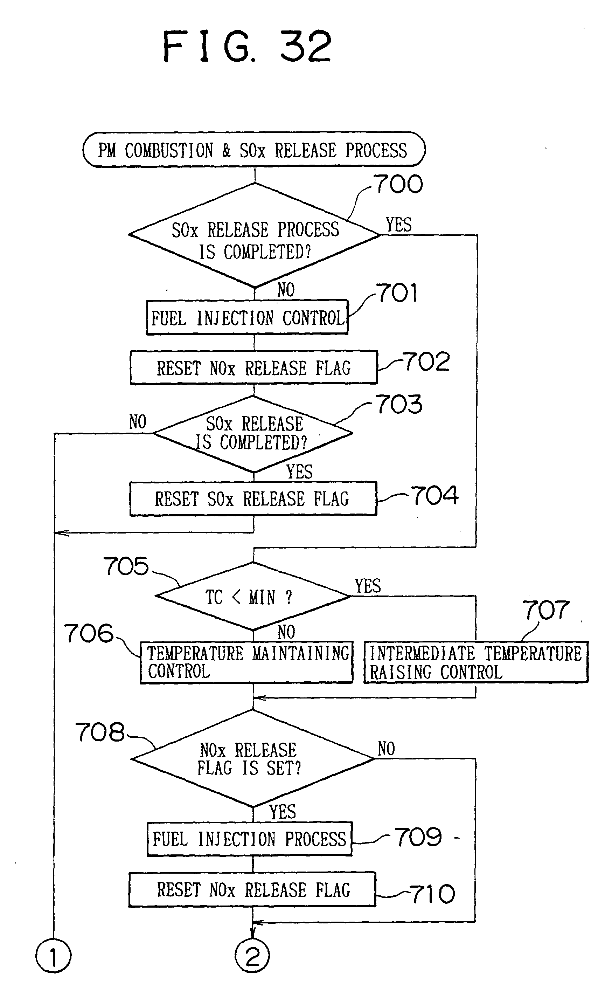

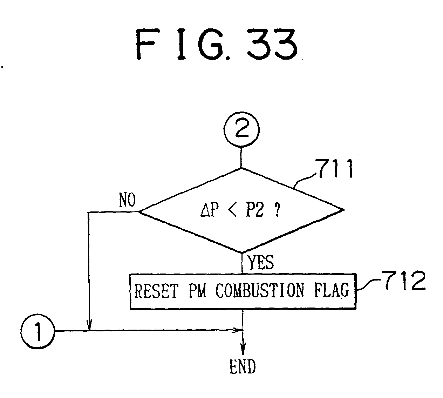

When step 210 determines that the PM combustion process and the SOx release process should be both executed at the same time, on the other hand, the control flow goes to step 214 to carry out the PM combustion and SOx release process as shown in Fig. 24A or Fig. 24B. A routine for implementing the PM combustion and SOx release process shown in Fig. 24 A is illustrated in Fig. 30 and Fig. 31, and a routine for implementing the PM combustion and SOx release process shown in Fig. 24B is illustrated in Fig. 32 and Fig. 33.

If step 201 determines that L is larger than X(N), the control flow goes to step 202 to reset the flag I, and the control flow goes to step 217 to perform the second mode of combustion. More specifically, in step 217, a target opening ST of the throttle valve 16 is obtained from the map as shown in Fig. 15A, and the opening of the throttle valve 16 is controlled to the target opening ST. In the next step 218, a target opening SE of the EGR control valve 23 is obtained from the map as shown in Fig. 15B, and the opening of the EGR control valve 23 is controlled to the target opening SE.

Step 219 is then executed to determine whether the PM combustion flag is set or not. When the PM combustion flag is not set, the control flow goes to step 220 to determine whether the NOx release flag is set or not. If the NOx release flag is not set, the control flow goes to step 221 in which fuel injection is performed based on the map as shown in Fig. 14 so as to provide the air-fuel ratio as indicated in Fig. 13. At this time, the second mode of combustion is performed with a lean air-fuel ratio. If step 220 determines that the NOx release flag is set, on the other hand, the control flow goes to step 222 in which additional fuel is injected into the combustion chamber so that the air-fuel ratio of exhaust gas flowing into the NOx absorbent turns rich.

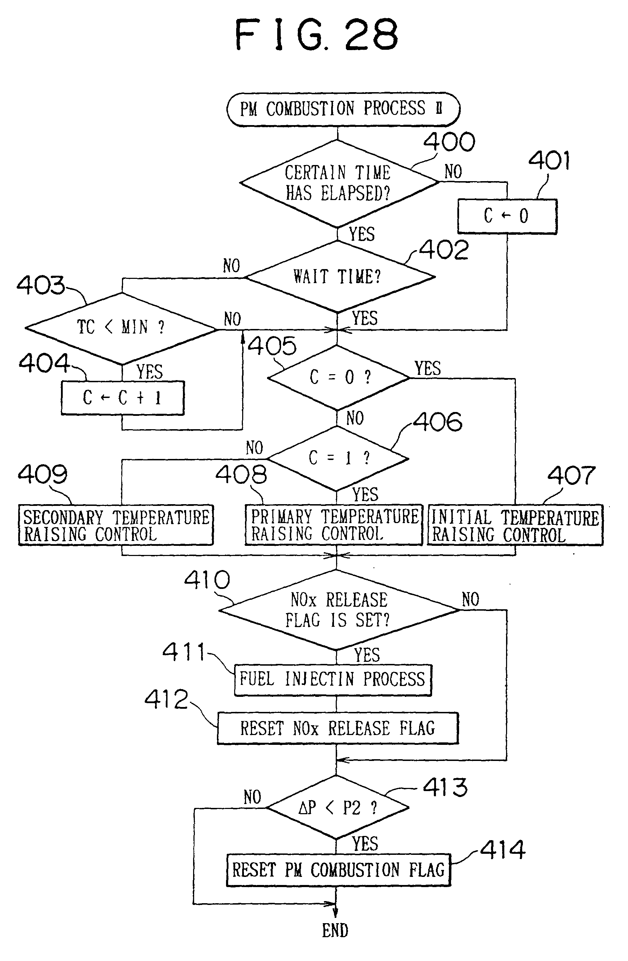

If step 219 determines that the PM combustion flag is set, on the other hand, the control flow goes to step 224 to execute the PM combustion process II as shown in Fig. 22. A routine for implementing the PM combustion process II is illustrated in Fig. 28.

If the flag I is reset, the control flow goes from step 200 to step 215 in the next control cycle, to determine whether the required load L gets smaller than the second boundary Y(N). If L is equal to or greater than Y(N), the control flow goes to step 217 to perform the second mode of combustion. If step 215 determines that the required load L is smaller than the second boundary Y(N), on the other hand, the control flow goes to step 216 to set the flag I. The control flow then proceeds to step 203 to perform low-temperature combustion.

Next, the PM combustion process I as shown in Fig. 27 will be explained with reference to Fig. 21.

Referring to Fig. 27, step 300 is initially executed to determine whether the initial temperature raising control has been completed or not. If the initial temperature raising control has not been completed, the control flow goes to step 301 to perform the initial temperature raising control, and then goes to step 308. If step 300 determines that the initial temperature raising control has been completed, step 302 is then executed to determine whether the temperature TC of the particulate filter 19 is lower than the lower-limit temperature MIN. If TC is equal to or higher than MIN, the control flow goes to step 303 to perform temperature maintaining control, and then goes to step 305. If step 303 determines that TC is lower than MIN, on the other hand, the control flow goes to step 304 to start intermediate temperature control. Once TC falls below MIN, the intermediate temperature control is kept performed until the temperature TC of the particulate filter 19 reaches the upper-limit temperature MAX.

In step 305, it is determined whether the NOx release flag is set or not. If the NOx release flag is not set, the control flow goes to step 308 skipping steps 306 and 307. If step 305 determines that the NOx release flag is set, on the other hand, the control flow goes to step 306 to control the fuel injection amount so that the air-fuel ratio becomes rich, and then goes to step 307 to reset the NOx release flag. Step 308 is then executed to determine whether a difference ΔP in the pressure detected by the differential pressure sensor 20 becomes smaller than a predetermined value P2, and if an affirmative decision (YES) is obtained in step 308, namely, ΔP < P2, the control flow goes to step 309 to reset the PM combustion flag.

The PM combustion process II as shown in Fig. 28 will be explained with reference to Fig. 22.

Referring to Fig. 28, step 400 is initially executed to determine whether a certain period of time has elapsed since the PM combustion flag is set. If the above certain time has not elapsed, the control flow goes to step 401 to zero the value C that represents the state of the temperature raising control. Step 405 is then executed to determine whether C is zero or not, and, when C is equal to 0, the control flow goes to step 407 to perform the initial temperature raising control. The control flow then proceeds to step 410. If step 400 determines that a definite period of time has elapsed since the PM combustion flag is set, the control flow goes to step 402 to determine whether it is currently within a wait time that starts upon switching from the initial temperature raising control to the primary temperature raising control. The control flow goes to step 403 when the initial temperature raising control is performed.

In step 403, it is determined whether the temperature TC of the particulate filter 19 falls below the lower-limit temperature MIN or not. If TC is equal to or higher than MIN, the control flow goes to step 405, and then goes to step 407 to continue the initial temperature raising control. If step 403 determines that TC is lower than MIN, on the other hand, the control flow goes to step 404 to increment C by 1. After execution of step 405, step 406 is executed to determine whether C is equal to 1 or not. Since C is equal to 1 in the current control cycle, the control flow goes to step 408 to perform the primary temperature raising control, and then goes to step 410. For a definite period of time that starts upon switching from the initial temperature raising control to the primary temperature raising control, it is determined to be within the waiting time, and therefore the control flow goes from step 402 to steps 405, 406, 408, to keep performing the primary temperature raising control.

Upon a lapse of the wait time, the control flow goes from step 402 to step 403. If step 403 determines that TC is lower than MIN, the control flow goes to step 404 to make C equal to 2. At this time, therefore, the control flow goes from step 406 to step 409 to perform the secondary temperature raising control.

In step 410, it is determined whether the NOx release flag is set or not. When the NOx release flag is not set, the control flow jumps to step 413. If step 410 determines that the NOx release flag is set, the control flow goes to step 411 to control the amount of fuel injected so as to make the air-fuel ratio rich, and the NOx release flag is reset in step 412. Step 413 is then executed to determine whether a difference ΔP in the pressure detected by the differential pressure sensor 20 is smaller than a predetermined value P2, and when ΔP is smaller than the predetermined value P2, the control flow goes to step 414 to reset the PM combustion flag.

Next, the SOx release process as shown in Fig. 29 will be now explained with reference to Fig. 23.

Referring to Fig. 29, step 500 is initially executed to control the fuel injection amount so that the average air-fuel ratio in the combustion chamber 5 becomes rich. Step 501 is then executed to reset the NOx release flag. Step 502 is then executed to determine whether the operation to release SOx absorbed in the NOx absorbent has been completed or not. If the SOx releasing operation is completed, the control flow goes to step 503 to reset the SOx release flag.

The PM combustion and SOx release process as shown in Fig. 30 and Fig. 31 will be now explained with reference to Fig. 24A.

Referring to Fig. 30 and Fig. 31, step 600 is initially executed to determine whether PM combustion process has been completed or not. When the PM combustion process is not completed, the control flow goes to step 601 to determine whether the initial temperature raising control has been completed. When the initial temperature raising control has not been completed, the control flow goes to step 602 to perform the initial temperature raising control, and the control flow then goes to step 609. If step 601 determines that the initial temperature raising control has been completed, the control flow goes to step 603 to determine whether the temperature TC of the particulate filter 19 falls below the lower-limit temperature MIN. When TC is equal to or higher than MIN, the control flow goes to step 604 to perform temperature maintaining control, and then goes to step 606. If step 603 determines that TC is lower than MIN, the control flow goes to step 605 to start intermediate temperature control. Once TC falls below MIN, the intermediate temperature control is kept performed until the temperature TC of the particulate filter 18 reaches the upper-limit temperature MAX.

In step 606, it is determined whether the NOx release flag is set or not. If NOx release flag is not set, the control flow goes to step 609 skipping steps 607 and 608. If step 606 determines that the NOx release flag is set, the control flow goes to step 607 to control the fuel injection amount so that the air-fuel ratio becomes rich, and then goes to step 608 to reset the NOx release flag. In step 609, it is determined whether a difference ΔP in the pressure detected by the differential pressure sensor 20 is equal to or smaller than a predetermined value P2. If ΔP is smaller than P2, the control flow goes to step 610 to reset the PM combustion flag.

If step 600 determines that the PM combustion process has been completed, the control flow goes to step 611 to control the fuel injection amount so that the average air-fuel ratio in the combustion chamber 5 becomes rich. Step 612 is then executed to reset the NOx release flag. In the next step 613, it is determined whether the operation to release SOx absorbed in the NOx absorbent has been completed. If the SOx releasing operating has been completed, the control flow goes to step 614 to reset the SOx release flag.

Next, the PM combustion and SOx release process as shown in Fig. 32 and Fig. 33 will be explained with reference to Fig. 24B.

Referring to Fig. 32 and Fig. 33, step 700 is initially executed to determine whether the SOx release process has been completed or not. If the SOx release process has not been completed, the control flow goes to step 701 to control the amount of fuel injected so that the average air-fuel ratio in the combustion chamber 5 becomes rich. Step 703 is then executed to determine whether the operation to release SOx absorbed in the NOx absorbent has been completed or not. If the SOx releasing operation has been completed, the control flow goes to step 704 to reset the SOx release flag.

If step 700 determines that the SOx release process has been completed, the control flow goes to step 705 to determine whether the temperature TC of the particulate filter 19 falls below the lower-limit temperature MIN. If TC is equal to or higher than MIN, the control flow goes to step 706 to perform temperature maintaining control, and then goes to step 708. If step 705 determines that TC is lower than MIN, on the other hand, the control flow goes to step 707 to start intermediate temperature control. Once TC falls below MIN, the intermediate temperature control is kept performed until the temperature TC of the particulate filter 19 reaches the upper-limit temperature MAX.

In step 708, it is determined whether the NOx release flag is set or not. If the NOx release flag is not set, the control flow goes to step 711 skipping steps 709 and 710. If step 708 determines that the NOx release flag is set, the control flow goes to step 709 to control the fuel injection amount so as to make the air-fuel ratio rich. Step 710 is then executed to reset the NOx release flag. In the next step 711, it is determined whether a difference ΔP in the pressure detected by the differential pressure sensor 20 becomes smaller than a predetermined value P2 or not. If ΔP becomes smaller than P2, the control flow goes to step 712 to reset the PM combustion flag.

In the illustrated embodiment as described above, when the particulates should be burned, the temperature of the particulate trapping device can be rapidly raised to a level at which the particulates can be burned.

## Claims

1. An internal combustion engine wherein the amount of soot generated gradually increases and reaches a peak as the amount of inert gas in a combustion chamber (5) increases, wherein
the amount of inert gas in the combustion chamber (5) can be further increased beyond a point at which the amount of soot generated reaches the peak; wherein
a particulate trapping device (18) is disposed in an engine exhaust passage, the particulate trapping device (18) comprising an NOx absorbent capable of absorbing NOx contained in exhaust gas when the air-fuel ratio of the exhaust gas is lean, and capable of releasing the NOx absorbed in the NOx absorbent when the air-fuel ratio of the exhaust gas is substantially equal to the stoichiometric air-fuel ratio or rich, and wherein
if the temperature of the particulate trapping device (18) is required to be increased to lie within a temperature range at which particulates can be burned under conditions that the amount of inert gas in the combustion chamber (5) is larger than that of inert gas with which the amount of soot generated reaches the peak and that the current average air-fuel ratio in the combustion chamber (5) is lean, the average air-fuel ratio in the combustion chamber is at least temporarily controllable to be richer than said current average air-fuel ratio, wherein
the average air-fuel ratio in the combustion chamber (5) is at least temporarily controllable to be stoichiometric or rich, wherein
after the average air-fuel ratio in the combustion chamber (5) is temporarily controlled to be stoichiometric or rich, a temperature control operation is performed so that the temperature of the particulate trapping device (18) is maintained in the temperature range in which the particulates are burned, under a condition that the amount of inert gas in the combustion chamber (5) is larger than that of inert gas with which the amount of soot generated reaches the peak,
wherein a temperature raising control is performed until the temperature of the particulate trapping device (18) detected by a temperature sensor (29) reaches a set upper-limit temperature (T_{MAX}).

2. An internal combustion engine according to claim 1, wherein
the average air-fuel ratio in the combustion chamber (5) is at least temporarily controllable to be stoichiometric or rich.

3. An internal combustion engine according to claim 1 or 2, wherein
an exhaust gas recirculation system (22, 23) is provided for recirculating exhaust gas discharged from the combustion chamber (5), into an engine intake passage, and said inert gas consists of the exhaust gas recirculated by the exhaust gas recirculation system.

4. An internal combustion engine according to claim 2 or 3, wherein
after the average air-fuel ratio in the combustion chamber (5) is temporarily controlled to be stoichiometric or rich, a temperature control operation is performed so that the temperature of the particulate trapping device (18) is maintained in the temperature range in which the particulates are burned, under a condition that the amount of inert gas in the combustion chamber (5) is larger than that of inert gas with which the amount of soot generated reaches the peak.

5. An internal combustion engine according to claim 4, wherein
the average air-fuel ratio in the combustion chamber (5) is kept lean or substantially equal to the stoichiometric air-fuel ratio when the temperature of the particulate trapping device (18) is maintained in the temperature range in which the particulates are burned.

6. An internal combustion engine according to claim 5, wherein
when the temperature of the particulate trapping device (18) is lowered during the temperature control operation for maintaining the temperature of the particulate trapping device (18) in the temperature range in which the particulates are burned, the average air-fuel ratio in the combustion chamber is controlled to be stoichiometric or rich if the current average air-fuel ratio is lean, and is controlled to be rich if the current average air-fuel ratio is equal to the stoichiometric air-fuel ratio.

7. An internal combustion engine according to any one of claims 1-6, wherein
the average air-fuel ratio in the combustion chamber (5) is temporarily controlled to be rich when NOx should be released from the NOx absorbent under a condition that the amount of inert gas in the combustion chamber (5) is larger than that of inert gas with which the amount of soot generated reaches the peak.

8. An internal combustion engine according to any one of claims 1-7, wherein
the average air-fuel ratio in the combustion chamber is controlled to be stoichiometric or rich when SOx should be released from the NOx absorbent under a condition that the amount of inert gas in the combustion chamber (5) is larger than that of inert gas with which the amount of soot generated reaches the peak.

9. An internal combustion engine according to any one of claims 1-8, wherein
when it is determined that the particulates caught by the particulate trapping device (18) should be burned and SOx should be released from the NOx absorbent under a condition that the amount of inert gas in the combustion chamber (5) is larger than that of inert gas with which the amount of soot generated reaches the peak, an operation to release SOx from the NOx absorbent follows completion of combustion of the particulates, or the combustion of the particulates follows completion of the operation to release SOx from the NOx absorbent.

10. An internal combustion engine according to any one of claims 1-9, wherein
switching means is provided for operating the engine in a selected one of the first combustion mode in which the amount of inert gas in the combustion chamber (5) is larger than that of inert gas with which the amount of soot generated reaches the peak and almost no soot is generated, and the second combustion mode in which the amount of inert gas in the combustion chamber (5) is smaller than that of inert gas with which the amount of soot generated reaches the peak, with the fuel injection being able to be divided into a main fuel injection and an auxiliary or additional fuel injection.

11. An internal combustion engine according to claim 10, wherein
the amount of unburned HC discharged from the combustion chamber (5) is increased or the temperature of exhaust gas is increased when the temperature of the particulate trapping device (18) should be increased to lie within the temperature range at which particulates can be burned while the engine is operating in the second combustion mode with the average air-fuel ratio in the combustion chamber (5) being lean.

12. An internal combustion engine according to claim 11, wherein
the amount of unburned HC discharged from the combustion chamber (5) is increased by changing the timing of fuel injection into the combustion chamber (5) or performing the additional fuel injection after the main fuel injection.

13. An internal combustion engine according to claim 11, wherein
the temperature of the exhaust gas is increased by delaying the timing of fuel injection into the combustion chamber (5), or performing the auxiliary fuel injection with a small amount of fuel before the main fuel injection and also delaying the injection timing of the main fuel.

14. An internal combustion engine according to claim 11, wherein
if the temperature of the particulate trapping device (18) fails to be increased to lie within the temperature range at which the particulates can be burned even if the timing of fuel injection into the combustion chamber (5) is delayed, or the temperature of the particulate trapping device (18) is reduced to be lower than a predetermined temperature during combustion of the partculates, the temperature of exhaust gas is increased by performing the auxiliary fuel injection with a small amount of fuel before the main fuel injection and also further delaying the injection timing of the main fuel.

15. An internal combustion engine according to any one of claims 10-14, wherein
when NOx should be released from the NOx absorbent while the engine is operating in the second combustion mode, the air-fuel ratio of the exhaust gas is temporarily controlled to be rich by performing the additional fuel injection after the main fuel injection.

16. An internal combustion engine according to any one of claims 10-15, wherein
the engine operates in a selected one of the first operating region in which a required load is relatively small, and the second operation region in which the required load is relatively large, and that combustion in the first operating region is performed in the first combustion mode, and combustion in the second operating region is performed in the second combustion mode.

17. A method of controlling an internal combustion engine wherein the amount of soot generated gradually increases and reaches a peak as the amount of inert gas in a combustion chamber (5) increases, and wherein a particulate trapping device (18) is disposed in an engine exhaust passage, the particulate trapping device comprising an NOx absorbent capable of absorbing NOx contained in exhaust gas when the air-fuel ratio of the exhaust gas is lean, and capable of releasing the NOx absorbed in the NOx absorbent when the air-fuel ratio of the exhaust gas is substantially equal to the stoichiometric air-fuel ratio or rich, said method being **characterized by**:
further increasing the amount of inert gas in the combustion chamber (5) when appropriate beyond a point at which the amount of soot generated reaches the peak, so that the temperature of fuel and its surrounding gas upon combustion within the combustion chamber (5) becomes lower than temperatures at which soot is produced, whereby almost no soot is produced; and
at least temporarily controlling the average air-fuel ratio in the combustion chamber (5) to be richer than the current average air-fuel ratio if the temperature of the particulate trapping device (18) is required to be increased to a temperature level at which particulates can be burned under conditions that the amount of inert gas in the combustion chamber (5) is larger than that of inert gas with which the amount of soot generated reaches the peak and that the current average air-fuel ratio in the combustion chamber (5) is lean, wherein a temperature raising control is performed until the temperature of the particulate trapping device (18) detected by a temperature sensor (29) reaches a set upper-limit temperature (T_{MAX}).

## Patentansprüche

1. Interne Verbrennungskraftmaschine, in der eine erzeugte Rußmenge allmählich ansteigt und einen Spitzenwert erreicht, wenn eine Inertgasmenge in einer Verbrennungskammer (5) zunimmt, wobei
die Inertgasmenge in der Verbrennungskammer (5) weiter über den Punkt hinaus gesteigert wird, bei dem die erzeugte Rußmenge einen Spitzenwert erreicht, wobei
eine Partikelauffangvorrichtung (18) in einem Motorabgaskanal angeordnet ist, weiter die Partikelauffangvorrichtung (18) ein NOx-Absorptionsmittel zur Absorption von im Abgas enthaltenen NOx, wenn das Luftkraftstoffverhältnis des Abgases mager ist, und zur Freigabe von in dem Absorptionsmittel absorbierten NOx, wenn das Luftkraftstoffverhältnis des Abgases im Wesentlichen gleich dem stoichometrischen Luftkraftstoffverhältnis oder fett ist, umfaßt, und wobei,
wenn die Temperatur der Partikelauffangvorrichtung (18) gesteigert werden muss, um in dem Temperaturbereich zu liegen, bei dem Partikel unter Bedingungen verbrannt werden können, bei denen die Inertgasmenge in der Verbrennungskammer (5) größer ist als die Inertgasmenge, bei der die erzeugte Rußmenge einen Spitzenwert erreicht, und bei denen das gegenwärtige mittlere Luftkraftstoffverhältnis in der Verbrennungskammer (5) mager ist, das mittlere Luftkraftstoffverhältnis in der Verbrennungskammer mindestens zeitweise gesteuert fetter als das laufende mittlere Luftkraftstoffverhältnis ist, wobei das mittlere Luftkraftstoffverhältnis in der Verbrennungskammer (5) mindestens zeitweise gesteuert stoichometrisch oder fett ist, wobei, nachdem das mittlere Luftkraftstoffverhältnis in der Verbrennungskammer (5) zeitweise gesteuert stoichometrisch oder fett ist, eine Temperatursteuerung durchgeführt wird, sodass die Temperatur der Partikelauffangvorrichtung (18) in einem Temperaturbereich gehalten wird, in dem die Partikel verbrannt werden, unter einer Bedingung, bei der die Inertgasmenge in der Verbrennungskammer (5) größer als das Inertgas ist, mit der die erzeugte Rußmenge den Spitzenwert erreicht, wobei
die Steuerung des Temperaturanstiegs durchgeführt wird, bis die von einem Temperatursensor (29) erfaßte Temperatur der Partikelauffangvorrichtung (18) eine festgesetzte obere Grenztemperatur (Tₘₐₓ) erreicht.

2. Interne Verbrennungskraftmaschine nach Anspruch 1, wobei das mittlere Luftkraftstoffverhältnis in der Verbrennungskammer (5) mindestens zeitweise gesteuert stoichometrisch oder fett ist.

3. Interne Verbrennungskraftmaschine nach Anspruch 1 oder 2, wobei das Abgasrückführsystem (22, 23) zur Rückführung von Abgas aus der Verbrennungskammer (5) in einen Ansaugkanal vorgesehen ist, und das Inertgas aus dem von dem Abgasrückführsystem zurückgeführten Abgas besteht.

4. Interne Verbrennungskraftmaschine nach Anspruch 2 oder 3, wobei, nachdem das mittlere Luftkraftstoffverhältnis in der Verbrennungskammer (5) zeitweise gesteuert stoichometrisch oder fett ist, eine Temperatursteuerung so durchgeführt wird, dass die Temperatur der Partikelauffangvorrichtung (18) in einem Temperaturbereich gehalten wird, in dem die Partikel verbrannt werden, unter einer Bedingung, dass die Inertgasmenge in der Verbrennungskammer (5) größer ist als das Inertgas, mit dem die Rußerzeugung den Spitzenwert erreicht.

5. Interne Verbrennungskraftmaschine nach Anspruch 4, wobei das mittlere Luftkraftstoffverhältnis in der Verbrennungskammer (5) mager oder im Wesentlichen gleich dem stoichometrischen Luftkraftstoffverhältnis gehalten wird, wenn die Temperatur der Partikelauffangvorrichtung (18) in einem Temperaturbereich gehalten wird, in dem die Partikel verbrannt werden.

6. Interne Verbrennungskraftmaschine nach Anspruch 5, wobei, wenn die Temperatur der Partikelauffangvorrichtung (18) während der Temperatursteuerung zur Aufrechterhaltung der Temperatur der Partikelauffangvorrichtung (18) in einem Bereich, in dem die Partikel verbrannt werden, abnimmt, das mittlere Luftkraftstoffverhältnis in der Verbrennungskammer auf stoichometrisch oder fett geregelt wird, wenn das gegenwärtige Luftkraftstoffverhältnis mager ist, und auf fett geregelt wird, wenn das gegenwärtige Luftkraftstoffverhältnis gleich dem stoichometrischen Luftkraftstoffverhältnis ist.

7. Interne Verbrennungskraftmaschine nach einem der Ansprüche 1 bis 6, wobei das mittlere Luftkraftstoffverhältnis in der Verbrennungskammer (5) zeitweise auf fett geregelt wird, wenn NOx von dem Absorptionsmittel unter einer Bedingung freigegeben werden soll, dass die Inertgasmenge in der Verbrennungskammer (5) größer als das Inertgas ist, mit dem die erzeugte Rußmenge den Spitzenwert erreicht.

8. Interne Verbrennungskraftmaschine nach einem der Ansprüche 1 bis 7, wobei das mittlere Luftkraftstoffverhältnis in der Verbrennungskammer auf stoichometrisch oder fett geregelt wird, wenn SOx von dem NOx-Absorptionsmittel unter einer Bedingung freigeben werden soll, dass die Inertgasmenge in der Verbrennungskammer (5) größer als das Inertgas ist, bei dem die erzeugte Rußmenge einen Spitzenwert erreicht.

9. Interne Verbrennungskraftmaschine nach einem der Ansprüche 1 bis 8, wobei, wenn bestimmt wird, dass die von der Partikelauffangvorrichtung (18) aufgefangenen Partikel verbrannt werden sollen, und NOx von dem SOx-Absorptionsmittel unter einer Bedingung freigegeben werden sollen, in der die Inertgasmenge in der Verbrennungskammer (5) größer ist als das Inertgas, bei dem die erzeugte Rußmenge einen Spitzenwert erreicht, die Freigabe von SOx von dem NOx-Absorptionsmittel der Beendigung der Verbrennung der Partikel folgt, oder die Verbrennung der Partikel der Beendigung der Freigabe von SOx von dem NOx-Absorptionsmittel folgt.

10. Interne Verbrennungskraftmaschine nach einem der Ansprüche 1 bis 9, wobei eine Schalteinrichtung zum Betreiben des Motors in einer ausgewählten ersten Verbrennungsart, bei der die Inertgasmenge in der Verbrennungskammer (5) größer als das Inertgas ist, bei dem die erzeugte Rußmenge einen Spitzenwert erreicht, und fast kein Ruß erzeugt wird, und in einer zweiten Verbrennungsart, bei der die Inertgasmenge in der Verbrennungskammer (5) kleiner als das Inertgas ist, bei dem die erzeugte Rußmenge einen Spitzenwert erreicht, vorgesehen ist, wobei die Kraftstoffeinspritzung in einer Hauptkraftstoffeinspritzung und eine Hilfs- oder Zusatzkraftstoffeinspritzung teilbar ist.

11. Interne Verbrennungskraftmaschine nach Anspruch 10, wobei die Menge des der Verbrennungskammer (5) ausgegebenen und verbrannten HC gesteigert oder die Temperatur des Abgases erhöht wird, wenn die Temperatur der Partikelauffangvorrichtung (18) erhöht werden soll, um in dem Temperaturbereich zu liegen, in dem die Partikel verbrannt werden können, während sich der Motor in der zweiten Verbrennungsart mit dem mageren Luftkraftstoffverhältnis in der Verbrennungskammer (5) befindet.

12. Interne Verbrennungskraftmaschine nach Anspruch 11, wobei die Menge des von der Verbrennungskammer (5) ausgegebenen und verbrannten HC gesteigert wird, in dem der Zeitpunkt der Kraftstoffeinspritzung in die Verbrennungskammer (5) geändert oder die Zusatzkraftstoffeinspritzung nach der Hauptkraftstoffeinspritzung durchgeführt wird.

13. Interne Verbrennungskraftmaschine nach Anspruch 11, wobei die Temperatur des Abgases durch Verzögern des Zeitpunktes der Kraftstoffeinspritzung in die Verbrennungskammer (5) oder mittels Durchführen der Hilfskrafstoffeinspritzung mit einer kleinen Kraftstoffmenge vor der Hauptkraftstoffeinspritzung und durch Verzögern des Zeitpunkts der Hauptkraftstoffeinspritzung gesteigert wird.

14. Interne Verbrennungskraftmaschine nach Anspruch 11, wobei, wenn die Temperatur der Partikelauffangvorrichtung (18) nicht bis in den Temperaturbereich, in dem die Partikel verbrannt werden, erhöht wird, wenn der Zeitpunkt der Kraftstoffeinspritzung in die Verbrennungskammer (5) verzögert wird, oder die Temperatur der Partikelauffangvorrichtung (18) niedriger als eine vorbestimmte Temperatur während der Partikelverbrennung ist, die Temperatur des Abgases mittels der Hilfskraftstoffeinspritzung mit einer kleinen Kraftstoffmenge vor der Hauptkraftstoffeinspritzung und ebenfalls durch weiteres Verzögern des Zeitpunktes der Hauptkraftstoffeinspritzung erhöht wird.

15. Interne Verbrennungskraftmaschine nach einem der Ansprüche 10 bis 14, wobei, wenn NOx von dem NOx-Absorptionsmittel freigegeben werden soll, während der Motor in der zweiten Verbrennungsart arbeitet, das Luftkraftstoffverhältnis des Abgases zeitweise gesteuert fett ist, in dem die Hilfskraftstoffeinspritzung nach der Hauptkraftstoffeinspritzung durchgeführt wird.

16. Interne Verbrennungskraftmaschine nach einem der Ansprüche 10 bis 15, wobei der Motor in einem ausgewählten ersten Betriebsbereich, in dem die erforderliche Last relativ klein ist, und in einem zweiten Betriebsbereich arbeitet, in dem die erforderliche Last relativ groß ist, und dass die Verbrennung im ersten Betriebsbereich in der ersten Verbrennungsart durchgeführt wird, und die Verbrennung im zweiten Betriebsbereich in der zweiten Verbrennungsart durchgeführt wird.

17. Verfahren zur Steuerung einer internen Verbrennungskraftmaschine, wobei die erzeugte Rußmenge allmählich zunimmt und einen Spitzenwert erreicht, wenn die Inertgasmenge in einer Verbrennungskammer (5) zunimmt, und wobei eine Partikelauffangvorrichtung (18) in einem Abgaskanal angeordnet ist, die ein NOx-Absorptionsmittel zum Absorbieren von im Abgas enthaltenen NOx, wenn das Luftkraftstoffverhältnis des Abgases mager ist, umfaßt, und die das von dem NOx-Absorptionsmittel absorbierte NOx freigibt, wenn das Luftkraftstoffverhältnis des Abgases im Wesentlichen gleich dem stoichometrischen Luftkraftstoffverhältnis oder fett ist, **gekennzeichnet durch**
weiteres Erhöhen der Inertgasmenge in der Verbrennungskammer (5) im Bedarfsfall über einen Punkt, bei dem die Rußerzeugung den Spitzenwert erreicht, so, dass die Temperatur des Kraftstoffs und des umgebenden Gases bei der Verbrennung in der Verbrennungskammer (5) niedriger wird, als Temperaturen, bei denen Ruß erzeugt wird, wodurch fast kein Ruß erzeugt wird, und **durch**
mindestens zeitweises Regeln des mittleren Luftkraftstoffverhältnisses in der Verbrennungskammer (5), sodass es fetter als das gegenwärtige mittlere Luftkraftstoffverhältnis wird, wenn die Temperatur der Partikelauffangvorrichtung (18) auf ein Temperaturniveau erhöht werden muss, bei dem Partikel unter solchen Bedingungen verbrannt werden können, dass die Inertgasmenge in der Verbrennungskammer (5) größer als das Inertgas ist, bei dem die erzeugte Rußmenge den Spitzenwert erreicht, und dass das gegenwärtige mittlere Luftkraftstoffverhältnis in der Verbrennungskammer (5) mager ist, wobei eine Temperaturerhöhungsregelung durchgeführt wird, bis die von einem Temperatursensor (29) erfaßte Temperatur der Partikelauffangvorrichtung (18) eine festgesetzte obere Grenztemperatur (Tₘₐₓ) erreicht.

## Revendications

1. Moteur à combustion interne dans lequel la quantité de suie générée augmente progressivement et atteint une crête à mesure que la quantité de gaz inertes dans une chambre de combustion (5) augmente, dans lequel
la quantité de gaz inertes dans la chambre de combustion (5) peut augmenter davantage au-delà d'un point au niveau duquel la quantité de suie générée atteint la crête ; dans lequel
un dispositif destiné à piéger les matières particulaires (18) est disposé dans un passage d'échappement du moteur, le dispositif destiné à piéger les matières particulaires (18) comprenant un absorbant de NOx capable d'absorber les NOx contenus dans les gaz d'échappement lorsque le rapport air-carburant est pauvre, et capable de libérer les NOx absorbés dans l'absorbant de NOx lorsque le rapport air-carburant des gaz d'échappement est pratiquement égal au rapport air-carburant stoechiométrique ou riche, et dans lequel si la température du dispositif destiné à piéger les matières particulaires (18) doit être augmentée pour reposer à l'intérieur d'une plage de températures à laquelle les matières particulaires peuvent être brûlées dans des conditions telles que la quantité de gaz inertes dans la chambre de combustion (5) est supérieure à celle des gaz inertes avec lesquels la quantité de suie générée atteint la crête et que le rapport air-carburant moyen actuel dans la chambre de combustion (5) est pauvre, le rapport air-carburant moyen dans la chambre de combustion peut être au moins temporairement commandé pour être plus riche que ledit rapport air-carburant moyen actuel, dans lequel
le rapport air-carburant moyen dans la chambre de combustion (5) peut au moins être commandé pour être stoechiométrique ou riche, dans lequel
après que le rapport air-carburant moyen dans la chambre de combustion (5) ait été temporairement commandé pour être stoechiométrique ou riche, une opération de commande de température est réalisée de sorte que la température du dispositif destiné à piéger les matières particulaires (18) est maintenue dans la plage de températures dans laquelle les matières particulaires sont brûlées dans une condition telle que la quantité de gaz inertes dans la chambre de combustion (5) est supérieure à celle des gaz inertes avec lesquels la quantité de suie générée atteint la crête,
dans lequel une commande d'élévation de température est réalisée jusqu'à ce que la température du dispositif destiné à piéger les matières particulaires (18) détectée par un capteur de température (29) atteigne une température limite supérieure établie (T_{MAX}).

2. Moteur à combustion interne selon la revendication 1, dans lequel
le rapport air-carburant moyen dans la chambre de combustion (5) peut être commandé au moins temporairement pour être stoechiométrique ou riche.

3. Moteur à combustion interne selon la revendication 1 ou 2, dans lequel
un système de recirculation des gaz d'échappement (22, 23) est prévu pour faire recirculer les gaz d'échappement évacués de la chambre de combustion (5), dans un passage d'admission du moteur, et lesdits gaz inertes sont composés des gaz d'échappement mis à recirculer par le système de recirculation des gaz d'échappement.

4. Moteur à combustion interne selon la revendication 2 ou 3, dans lequel
après que le rapport air-carburant moyen dans la chambre de combustion (5) ait été temporairement commandé pour être stoechiométrique ou riche, une opération de commande de température est réalisée de sorte que la température du dispositif destiné à piéger les matières particulaires (18) est maintenue dans la plage de températures dans laquelle les matières particulaires sont brûlées, dans une condition telle que la quantité de gaz inertes dans la chambre de combustion (5) est supérieure à celle des gaz inertes avec lesquels la quantité de suie générée atteint la crête.

5. Moteur à combustion interne selon la revendication 4, dans lequel
le rapport air-carburant moyen dans la chambre de combustion (5) est maintenu pauvre ou sensiblement égal au rapport air-carburant stoechiométrique lorsque la température du dispositif destiné à piéger les matières particulaires (18) est maintenue dans la plage de températures dans laquelle les matières particulaires sont brûlées

6. Moteur à combustion interne selon la revendication selon la revendication 5, dans lequel
lorsque la température du dispositif destiné à piéger les matières particulaires (18) est abaissée pendant l'opération de commande de température destinée à maintenir la température du dispositif destiné à piéger les matières particulaires (18) dans la plage de températures dans laquelle les matières particulaires sont brûlées, le rapport air-carburant moyen dans la chambre de combustion est commandé pour être stoechiométrique ou riche si le rapport air-carburant moyen actuel est égal au rapport air-carburant stoechiométrique.

7. Moteur à combustion interne selon l'une quelconque des revendications 1 à 6, dans lequel
le rapport air-carburant moyen dans la chambre de combustion (5) est temporairement commandé pour être riche lorsque les NOx devraient être libérés de l'absorbant de NOx dans une condition telle que la quantité de gaz inertes dans la chambre de combustion (5) est supérieure à celle des gaz inertes avec lesquels la quantité de suie générée atteint la crête.

8. Moteur à combustion interne selon l'une quelconque des revendications 1 à 7, dans lequel
le rapport air-carburant moyen dans la chambre de combustion est commandé pour être stoechiométrique ou riche lorsque les SOx devraient être libérés de l'absorbant de NOx dans une condition telle que la quantité de gaz inertes dans la chambre de combustion (5) est supérieure à celle des gaz inertes avec lesquels la quantité de suie générée atteint la crête.

9. Moteur à combustion interne selon l'une quelconque des revendications 1 à 8, dans lequel
lorsqu'il est déterminé que les matières particulaires piégées par le dispositif destiné à piéger les matières particulaires (18) devraient être brûlées et que les SOx devraient être libérés de l'absorbant de NOx dans une condition telle que la quantité de gaz inertes dans la chambre de combustion (5) est supérieure à celle des gaz inertes avec lesquels la quantité de suie générée atteint la crête, une opération de libération des SOx de l'absorbant de NOx suit la fin de la combustion des matières particulaires, ou la combustion des matières particulaires suit la fin de l'opération de libération des SOx de l'absorbant de NOx.

10. Moteur à combustion interne selon l'une quelconque des revendications 1 à 9, dans lequel
un moyen de commutation est prévu pour actionner le moteur dans l'un sélectionné parmi le premier mode de combustion dans lequel la quantité de gaz inertes dans la chambre de combustion (5) est supérieure à celle des gaz inertes avec lesquels la quantité de suie générée atteint la crête et pratiquement aucune suie n'est produite, et le deuxième mode de combustion dans lequel la quantité de gaz inertes dans la chambre de combustion (5) est inférieure à celle des gaz inertes avec lesquels la quantité de suie générée atteint la crête, l'injection du carburant étant capable d'être divisée en une injection de carburant principale et une injection de carburant auxiliaire ou supplémentaire.

11. Moteur à combustion interne selon la revendication 10, dans lequel
la quantité de HC non brûlés évacués de la chambre de combustion (5) est augmentée ou la température des gaz d'échappement est augmentée lorsque la température du dispositif destiné à piéger les matières particulaires (18) devrait être augmentée pour reposer à l'intérieur de la plage de températures à laquelle les matières particulaires peuvent être brûlés alors que le moteur est en fonctionnement dans le deuxième mode de combustion avec le rapport air-carburant moyen dans la chambre de combustion (5) pauvre.

12. Moteur à combustion interne selon la revendication 11, dans lequel
la quantité de HC non brûlés évacués de la chambre de combustion (5) est augmentée en changeant le calage d'injection du carburant dans la chambre de combustion (5) ou en réalisant l'injection de carburant supplémentaire après l'injection de carburant principale.

13. Moteur à combustion interne selon la revendication 11, dans lequel
la température des gaz d'échappement est augmentée en retardant le calage de l'injection du carburant dans la chambre de combustion (5) ou en réalisant l'injection de carburant auxiliaire avec une faible quantité de carburant avant l'injection de carburant principale et en retardant également le calage d'injection du carburant principal.

14. Moteur à combustion interne selon la revendication 11, dans lequel
si la température du dispositif destiné à piéger les matières particulaires (18) échoue à augmenter pour reposer à l'intérieur de la plage de températures à laquelle les matières particulaires peuvent être brûlées même si le calage de l'injection de carburant dans la chambre de combustion (5) est retardé, ou si la température du dispositif destiné à piéger les matières particulaires (18) est réduite pour être inférieure à une température prédéterminée pendant la combustion des matières particulaires, la température des gaz d'échappement est augmentée en réalisant l'injection de carburant auxiliaire avec une faible de quantité de carburant avant l'injection de carburant principale et en retardant également davantage le calage d'injection du carburant principal.

15. Moteur à combustion interne selon l'une quelconque des revendications 10 à 14, dans lequel
lorsque les NOx devraient être libérés de l'absorbant de NOx alors que le moteur fonctionne dans le deuxième mode de combustion, le rapport air-carburant des gaz d'échappement est temporairement commandé pour être riche en réalisant l'injection de carburant supplémentaire après l'injection de carburant principale.

16. Moteur à combustion interne selon l'une quelconque des revendications 10 à 15, dans lequel
le moteur fonctionne dans l'une sélectionnée parmi la première région de fonctionnement dans laquelle une charge requise est relativement faible, et la deuxième région de fonctionnement dans laquelle la charge requise est relativement importante, et la combustion dans la première région de fonctionnement est réalisée dans le premier mode de combustion, et la combustion dans la deuxième région de fonctionnement est réalisée dans le deuxième mode de combustion.

17. Procédé de commande d'un moteur à combustion interne dans lequel la quantité de suie générée augmente progressivement et atteint une crête à mesure que la quantité de gaz inertes dans une chambre de combustion (5) augmente, et dans lequel un dispositif destiné à piéger les matières particulaires (18) est disposé dans un passage d'échappement du moteur, le dispositif destiné à piéger les matières particulaires comprenant un absorbant de NOx capable d'absorber les NOx contenus dans les gaz d'échappement lorsque le rapport air-carburant des gaz d'échappement est pauvre, et capable de libérer les NOx absorbés dans l'absorbant de NOx lorsque le rapport air-carburant des gaz d'échappement est sensiblement égal au rapport air-carburant stoechiométrique ou riche, ledit procédé étant **caractérisé par** les étapes consistant à :
augmenter davantage la quantité de gaz inertes dans la chambre de combustion (5) lorsque cela est approprié au-delà d'un point au niveau duquel la quantité de suie générée atteint la crête, de sorte que la température du carburant et de ses gaz environnants, sur combustion à l'intérieur de la chambre de combustion (5), devient inférieure aux températures auxquelles la suie est produite, d'où il résulte que pratiquement aucune suie n'est produite ; et
commander au moins temporairement le rapport air-carburant moyen dans la chambre de combustion (5) pour être plus riche que le rapport air-carburant moyen actuel si la température du dispositif destiné à piéger les matières particulaires (18) doit être augmentée à un niveau de température auquel les matières particulaires peuvent être brûlées dans des conditions telles que la quantité de gaz inertes dans la chambre de combustion (5) est supérieure à celle des gaz inertes avec lesquels la quantité de suie générée atteint la crête et que le rapport air-carburant moyen actuel dans la chambre de combustion (5) est pauvre, dans lequel une commande d'élévation de température est réalisée jusqu'à ce que la température du dispositif destiné à piéger les matières particulaires (18) détectée par un capteur de température (29) atteigne une température limite supérieure établie (T_{MAX}).
